# EUROPEAN PATENT APPLICATION

(11) **EP 4 750 044 A1**
(43) Date of publication of application: **27.05.2026**
(21) Application number: 24909779.1
(22) Date of filing: 06.08.2024
(51) Int. Cl.: H04M 3/42

(54) **RINGBACK TONE PLAYING METHOD AND DEVICE, AND STORAGE MEDIUM AND CHIP SYSTEM**

(30) Priority: 29.12.2023 CN 202311864534
(71) Applicant: Honor Device Co., Ltd., Shenzhen, Guangdong 518040 (CN)
(72) Inventor: YANG, Fei, Shenzhen, Guangdong 518040 (CN); HONG, Xin, Shenzhen, Guangdong 518040 (CN); JIANG, Chenyang, Shenzhen, Guangdong 518040 (CN)
(74) Representative: Gill Jennings & Every LLP
(86) International application number: PCT/CN2024/110151
(87) International publication number: WO 2025/138825

(57) **Abstract**

This application provides a ring back tone play method, a device, a storage medium, and a chip system. In the method, for a scenario in which a ring back tone type is a network ring back tone, that is, audio data of a ring back tone to be played is provided by a network side, it is set that when all audio packets received by a first terminal within a first time are silent packets, the ring back tone type is directly modified to a local ring back tone, and then the local ring back tone is played. This can ensure that the first terminal can play the ring back tone in a timely manner and prompt a user.

## Description

This application claims priority to Chinese Patent Application No. 202311864534.4, filed with the China National Intellectual Property Administration on December 29, 2023 and entitled "RING BACK TONE PLAY METHOD, DEVICE, STORAGE MEDIUM, AND CHIP SYSTEM", which is incorporated herein by reference in its entirety.

### TECHNICAL FIELD

This application relates to the communication field, and in particular, to a ring back tone play method, a device, a storage medium, and a chip system.

### BACKGROUND

IMS (IP Multimedia Subsystem, IP multimedia subsystem) is a concept proposed by 3GPP, is a universal network architecture for providing multimedia services over IP-based networks, and can provide converged multimedia services and Internet applications for users using different access means. VoLTE (Voice-over-LTE, voice over long term evolution) and VoNR (Voice over New Radio, voice over new radio) are currently common voice services using IP data transmission technologies, namely, IMS-based voice services.

For example, in a VoLTE voice service scenario, after a calling terminal initiates a call request to a called terminal in an IMS network, before the called terminal answers the call, to notify a user of progress of the call service, a prompt indicating that the other party is ringing is displayed on a user interface of the calling terminal, and a ring back tone is played.

However, in some implementations, for example, in a scenario in which a network ring back tone is played, there may be a problem that the ring back tone played by the calling terminal has no sound. Consequently, the user mistakenly considers that the call fails, affecting user experience.

### SUMMARY

This application provides a ring back tone play method, a device, a storage medium, and a chip system. In the method, for a scenario in which a ring back tone is provided by a network side, a calling terminal monitors whether an audio packet provided by the network side is received within a specified time, determines whether all data in the audio packet is a silent frame, and then determines whether to continue to play the network ring back tone or change to play a local ring back tone. This can ensure that the calling terminal can play the ring back tone in a timely manner and prompt a user.

According to a first aspect, this application provides a ring back tone play method, applied to a first terminal. The method includes: sending call request INVITE signaling, where the INVITE signaling includes early media P-Early-Media information; and playing a local ring back tone after signaling indicating a network ring back tone is received and when all received audio packets are silent packets within first duration.

Optionally, the first terminal is usually referred to as a calling terminal. For example, the first terminal may be, for example, first UE described below.

It should be understood that in an actual application, any terminal may serve as a calling terminal or a called terminal. This may be specifically determined based on whether a current call service is initiated by the terminal. That is, for a scenario in which the call service is initiated by the terminal device, the terminal device serves as the calling terminal. Otherwise, the terminal device serves as the called terminal.

Optionally, the call request (INVITE) signaling is INVITE signaling.

Optionally, the first duration, for example, 1s or 2s, may be specifically set based on a service requirement, a requirement of a chip used in the first terminal, or the like.

Optionally, the network ring back tone means that audio data of a ring back tone to be played is provided by a network side. The audio data, namely, audio data in an audio packet, is usually a color ring back tone set when a called party subscribes to a color ring back tone service.

Optionally, the local ring back tone means that audio data of a ring back tone to be played is provided by the first terminal.

Optionally, playing the local ring back tone is, for example, playing the local ring back tone. That is, the audio data of the ring back tone to be played is provided by a calling party.

Optionally, the audio data is usually, for example, a "beep" sound played in the calling terminal during waiting for the called terminal to answer the call.

Optionally, audio data corresponding to the local ring back tone may be stored in a local storage medium of the first terminal.

Optionally, the local storage medium of the first terminal may be, for example, an internal memory of the first terminal. In this way, in a scenario of switching to the local ring back tone, the audio data may be directly read from the local storage medium for play.

Optionally, that the first terminal sends INVITE signaling includes: The first terminal sends the INVITE signaling to the network side.

Optionally, that the first terminal sends the INVITE signaling to the network side includes: The first terminal sends the INVITE signaling to a first base station. The first base station is configured to send the INVITE signaling to a first core network device, the first base station is a base station accessed by the first terminal device, and the first core network device is a core network device corresponding to the first base station.

Optionally, the first base station is a base station corresponding to a 3G network architecture, a 4G network architecture, a 5G network architecture, or a 6G network architecture.

Therefore, for a scenario in which a ring back tone type is the network ring back tone, that is, audio data of a ring back tone to be played is provided by the network side, it is set that when all the audio packets received by the first terminal within the first time are silent packets, the ring back tone type is directly modified to the local ring back tone, and then the local ring back tone is played. This can ensure that the first terminal can play the ring back tone in a timely manner and prompt a user.

According to the first aspect, the P-Early-Media information included in the INVITE signaling is P-Early-Media: supported.

According to the first aspect or any implementation of the first aspect, the playing a local ring back tone after signaling indicating a network ring back tone is received and when all received audio packets are silent packets within first duration includes: starting timing after the signaling indicating the network ring back tone is received, where timing duration is the first duration; and playing the local ring back tone when an audio packet delivered by the network side is received within the first duration, and lengths of all received audio packets are less than or equal to a preset length.

Optionally, starting timing is, for example, performing timing immediately after the signaling indicating the network ring back tone is received.

Optionally, starting timing may alternatively be starting timing a specific time after the signaling indicating the network ring back tone is received.

Optionally, the preset length may be 15~25.

It may be understood that normally, a length of a non-silent packet is usually greater than the preset length. Therefore, when the length of the audio packet is less than or equal to the preset length, it may be determined that the received audio packet is a silent packet. To ensure that the first terminal can have a ring back tone whose sound can be played, the local ring back tone may be selected for play.

According to the first aspect or any implementation of the first aspect, the preset length is 19.

According to the first aspect or any implementation of the first aspect, the playing a local ring back tone after signaling indicating a network ring back tone is received and when all received audio packets are silent packets within first duration includes: starting timing after the signaling indicating the network ring back tone is received, where timing duration is the first duration; and playing the local ring back tone when an audio packet delivered by the network side is received within the first duration, and values of frame type flag bits in all received audio packets are a preset silent value.

Therefore, by determining whether the value of the frame type flag bit in the audio packet is the preset silent value, it may be quickly determined, based on the value of the frame type flag bit, whether the audio packet is a silent packet, that is, it is determined whether all audio data in the audio packet is a silent frame, and then an operation of switching the ring back tone type to the local ring back tone and playing the local ring back tone is performed in a timely manner, so that the first terminal can play the ring back tone in a timely manner.

According to the first aspect or any implementation of the first aspect, when a sound coding format used for the audio packet is an adaptive multi-rate AMR-NB format, the preset silent value is 8.

According to the first aspect or any implementation of the first aspect, when a sound coding format used for the audio packet is an adaptive multi-rate wideband AMR-WB format, the preset silent value is 9.

According to the first aspect or any implementation of the first aspect, the playing a local ring back tone after signaling indicating a network ring back tone is received and when all received audio packets are silent packets within first duration includes: starting timing after the signaling indicating the network ring back tone is received, where timing duration is the first duration; and playing the local ring back tone when an audio packet delivered by the network side is received within the first duration, and packet types of all received audio packets are a preset packet type.

Therefore, it may be quickly determined, based on the packet type of the audio packet, whether the received audio packet is a silent packet.

According to the first aspect or any implementation of the first aspect, the preset packet type is SID (COMFORT NOISE FRAME). That is, the audio packet includes SID (COMFORT NOISE FRAME).

According to the first aspect or any implementation of the first aspect, the local ring back tone is played when no audio packet delivered by the network side is received within the first duration.

Therefore, it can be ensured that the first terminal can always play a ring back tone with a sound.

According to the first aspect or any implementation of the first aspect, the signaling indicating the network ring back tone includes first signaling and/or second signaling, the first signaling is 1st signaling that indicates a ring back tone type and that is delivered by the network side after the INVITE signaling is initiated, and the second signaling is last signaling that indicates a ring back tone type and that is delivered by the network side.

According to the first aspect or any implementation of the first aspect, the first signaling is 183 signaling, and the second signaling is 180 signaling.

Optionally, when no 183 signaling is received, the first signaling may alternatively be Update signaling.

According to the first aspect or any implementation of the first aspect, when the first signaling includes a PEM header field, and a value included in the PEM header field is a first value, the first signaling is signaling indicating the local ring back tone; or when the first signaling includes a PEM header field, and a value included in the PEM header field is a second value, the first signaling is signaling indicating the network ring back tone.

Therefore, in a media negotiation process, that is, before signaling indicating that a second terminal has started to ring is received, for example, the second signaling, a current ring back tone type of the first terminal is determined based on the first signaling that is received in the media negotiation process and that can indicate the ring back tone type, so that the ring back tone type can be determined in advance, and then a ring back tone is played based on a corresponding strategy, to ensure that the first terminal can normally play the ring back tone before the second terminal answers the call.

According to the first aspect or any implementation of the first aspect, the method further includes: When the first signaling does not include the PEM header field, the first signaling is signaling indicating the network ring back tone; or when the first signaling does not include the PEM header field, the first signaling is signaling indicating the local ring back tone.

It should be noted that when the first signaling does not include the PEM header field, whether the ring back tone type is determined as the network ring back tone or the local ring back tone may be determined based on the chip used in the first terminal.

For example, when the used chip specifies that the PEM header field is not included, the ring back tone type is the network ring back tone. For such a first terminal, in this scenario, the ring back tone type may be determined as the network ring back tone, that is, the first signaling in this scenario is signaling indicating the network ring back tone.

For another example, when the used chip specifies that the PEM header field is not included, the ring back tone type is the local ring back tone. For such a first terminal, in this scenario, the ring back tone type may be determined as the local ring back tone, that is, the first signaling in this scenario is signaling indicating the local ring back tone.

According to the first aspect or any implementation of the first aspect, when the second signaling includes a PEM header field, and a value included in the PEM header field is a first value, the second signaling is signaling indicating the local ring back tone; or when the second signaling includes a PEM header field, and a value included in the PEM header field is a second value, the second signaling is signaling indicating the network ring back tone.

According to the first aspect or any implementation of the first aspect, the method further includes: When the second signaling does not include the PEM header field, the second signaling is signaling indicating the network ring back tone; or when the second signaling does not include the PEM header field, the second signaling is signaling indicating the local ring back tone.

It should be noted that when the second signaling does not include the PEM header field, whether the ring back tone type is determined as the network ring back tone or the local ring back tone may be determined based on the chip used in the first terminal.

For example, when the used chip specifies that the PEM header field is not included, the ring back tone type is the network ring back tone. For such a first terminal, in this scenario, the ring back tone type may be determined as the network ring back tone, that is, the second signaling in this scenario is signaling indicating the network ring back tone.

For another example, when the used chip specifies that the PEM header field is not included, the ring back tone type is the local ring back tone. For such a first terminal, in this scenario, the ring back tone type may be determined as the local ring back tone, that is, the second signaling in this scenario is signaling indicating the local ring back tone.

According to the first aspect or any implementation of the first aspect, the first value indicates that an early media function is not supported, and the second value indicates that the audio packet is allowed to be received.

According to the first aspect or any implementation of the first aspect, the first value is Inactive, and the second value is Sendrecv or Recvonly.

According to the first aspect or any implementation of the first aspect, when a value included in the first signaling is the first value, the PEM header field is P-Early-Media: Inactive, or when a value included in the first signaling is the second value, the PEM header field is P-Early-Media: Sendrecv or P-Early-Media: Recvonly.

Optionally, a case in which the PEM header field includes information P-Early-Media: Inactive also belongs to a case in which the value included in the first signaling is the first value.

Optionally, a case in which the PEM header field includes information P-Early-Media: Sendrecv or the PEM header field includes information P-Early-Media: Recvonly also belongs to a case in which the value included in the first signaling is the second value.

According to the first aspect or any implementation of the first aspect, the method further includes: receiving the first signaling, where the first signaling is signaling indicating the network ring back tone; when the second signaling is received within the first duration, the second signaling includes a PEM header field, and a value included in the PEM header field is a first value, the second signaling is signaling indicating the local ring back tone; and playing the local ring back tone.

Optionally, the audio packet delivered by the network side may not be received within the first duration. Therefore, when the first signaling indicates network tone play, and the second signaling indicating local tone play is received before the audio packet delivered by the network side is received, the audio data of the local ring back tone is directly played based on a ring back tone type indicated by the second signaling, to ensure that the ring back tone played by the first terminal does not change halfway, so as to ensure user experience.

According to the first aspect or any implementation of the first aspect, the method further includes: when the second signaling is received within the first duration, the second signaling includes the PEM header field, and the value included in the PEM header field is a second value, the second signaling is signaling indicating the network ring back tone; and playing the local ring back tone when all received audio packets are silent packets within second duration.

The second duration, for example, 1s or 2s, may be specifically set based on a service requirement, a requirement of a chip used in the first terminal, or the like.

Therefore, in a scenario in which resource preview is not supported, that is, the first signaling is not received before the second signaling, the ring back tone type is directly determined based on the second signaling, and when it is determined that the ring back tone type is the network ring back tone, it is determined, by using a determining condition of monitoring whether an audio packet delivered by the network side is received within a specified time and whether all received audio packets are silent packets, whether the ring back tone type needs to be changed to the local ring back tone, to ensure that the first terminal can play the ring back tone in a timely manner.

According to the first aspect or any implementation of the first aspect, the method further includes: playing the network ring back tone when there is a non-silent packet in the received audio packet within the second duration.

Optionally, playing the network ring back tone is playing audio data in the non-silent packet received within the second duration.

According to the first aspect or any implementation of the first aspect, the network ring back tone is played after the signaling indicating the network ring back tone is received and when there is a non-silent packet in the received audio packet within the first duration.

Optionally, playing the network ring back tone is playing audio data in the non-silent packet received within the first duration.

In this way, in a scenario of indicating network tone play, provided that there is audio (a non-silent packet) with a sound in an audio packet received within a specified time (the first time), audio data in the received audio packet is preferentially played based on the network ring back tone, to ensure that a color ring back tone set by a called user can be heard by a calling user.

According to the first aspect or any implementation of the first aspect, second signaling is received in a process of playing the network ring back tone, where the second signaling is last signaling that indicates a ring back tone type and that is delivered by the network side; when the second signaling includes a PEM header field, and a value included in the PEM header field is a first value, the second signaling is signaling indicating the local ring back tone; and the local ring back tone is played when all received audio packets are silent packets or no audio packet is received within third duration; or the network ring back tone continues to be played when there is a non-silent packet in a received audio packet within third duration.

The third duration, for example, 1s or 2s, may be specifically set based on a service requirement, a requirement of a chip used in the first terminal, or the like.

Therefore, when play of the network ring back tone has started before 180 signaling is received, but the received 180 signaling indicates the local ring back tone, the local ring back tone is not played first, but it waits for the third duration. If a non-silent audio packet is received within the third duration, the network ring back tone continues to be played. This can implement noninterruption of the network ring back tone, to ensure user experience.

Otherwise, the local ring back tone is played, to ensure that the first terminal can always play a ring back tone with a sound.

According to the first aspect or any implementation of the first aspect, when the second signaling includes the PEM header field, and the value included in the PEM header field is a second value, the second signaling is signaling indicating the network ring back tone; and the local ring back tone is played when all received audio packets are silent packets or no audio packet is received within fourth duration; or the network ring back tone continues to be played when there is a non-silent packet in a received audio packet within fourth duration.

The fourth duration, for example, 1s or 2s, may be specifically set based on a service requirement, a requirement of a chip used in the first terminal, or the like.

Therefore, to avoid a case in which an audio packet from the network side is waited for a long time or a played audio packet is a silent packet, and consequently the first terminal has no sound and user experience is affected, for a case in which the second signaling still indicates the first terminal to perform network tone play, it is still determined, by using a determining condition of monitoring whether an audio packet delivered by the network side is received within a specified time and whether all received audio packets are silent packets, whether the ring back tone type needs to be changed to the local ring back tone, to ensure that the first terminal can play the ring back tone in a timely manner.

According to the first aspect or any implementation of the first aspect, when the second signaling does not include the PEM header field, a ring back tone is played based on a ring back tone type indicated by first signaling.

Therefore, for a scenario in which resource reservation is supported, that is, the first signaling is received before the second signaling, when the second signaling does not include the PEM header field, a ring back tone type determined based on the first signaling and a play triggering condition are maintained, to ensure that the first terminal can always play a ring back tone, so as to ensure user experience.

According to the first aspect or any implementation of the first aspect, the method further includes: Before receiving third signaling, the first terminal device continues to monitor an audio packet delivered by the network side; and plays the network ring back tone when the audio packet delivered by the network side is received and there is a non-silent packet in the received audio packet.

The third signaling is, for example, a call acceptance (200 OK) signaling for answering a call.

This scenario is mainly specific to a case in which when the chip used in the first terminal does not include the PEM header field by default, the ring back tone type is the local ring back tone, as described in a case 2 in the following embodiment.

Therefore, before the 200 OK signaling, the first terminal continues to monitor whether the network side delivers a non-silent audio packet, and preferentially plays the network ring back tone after receiving the non-silent audio packet, to ensure a success rate of playing a customized color ring back tone and improve user experience.

According to the first aspect or any implementation of the first aspect, the third signaling is signaling that makes a final response to the INVITE signaling.

According to the first aspect or any implementation of the first aspect, the third signaling is 200 OK signaling.

It may be understood that the 200 OK signaling is call acceptance signaling. The signaling is a final response made to the call request (INVITE).

According to a second aspect, this application provides a terminal device. The terminal device includes a memory and a processor. The memory is coupled to the processor. The memory stores program instructions, and when the program instructions are executed by the processor, the terminal device is enabled to execute the instructions of the method according to the first aspect or any possible implementation of the first aspect.

According to a third aspect, this application provides a computer-readable medium, configured to store a computer program. The computer program includes instructions for performing the method according to the first aspect or any possible implementation of the first aspect.

According to a fourth aspect, this application provides a computer program. The computer program includes instructions for performing the method according to the first aspect or any possible implementation of the first aspect.

According to a fifth aspect, this application provides a chip system. The chip system includes a processor, configured to: invoke a computer program from a memory, and run the computer program, to enable a terminal device in which the chip system is installed to perform the method according to the first aspect or any possible implementation of the first aspect.

### BRIEF DESCRIPTION OF DRAWINGS

FIG. 1 is an example schematic diagram of a communication environment in which a terminal device implements a call service;
FIG. 2 is an example schematic diagram of a call processing process;
FIG. 3 an example schematic diagram of playing a ring back tone;
FIG. 4 is an example schematic diagram of playing a ring back tone by a calling terminal when a called terminal is ringing;
FIG. 5 is an example schematic diagram of a hardware structure of a terminal device;
FIG. 6A is an example schematic flowchart of a ring back tone play method according to an embodiment of this application;
FIG. 6B(1) and FIG. 6B(2) are an example schematic flowchart of another ring back tone play method according to an embodiment of this application;
FIG. 7A is an example schematic diagram of a scenario to which a ring back tone play method is applicable;
FIG. 7B is an example schematic diagram of a scenario to which another ring back tone play method is applicable;
FIG. 7C is an example schematic diagram of a scenario to which another ring back tone play method is applicable;
FIG. 8A is an example schematic diagram of a scenario to which another ring back tone play method is applicable;
FIG. 8B is an example schematic diagram of a scenario to which another ring back tone play method is applicable;
FIG. 8C is an example schematic diagram of a scenario to which another ring back tone play method is applicable;
FIG. 9 is an example schematic diagram of a scenario to which another ring back tone play method is applicable;
FIG. 10 is an example schematic diagram of a structure of a chip system; and
FIG. 11 is an example schematic diagram of a structure of a system-on-a-chip.

### DESCRIPTION OF EMBODIMENTS

The technical solutions in the embodiments of this application are clearly and completely described below with reference to the accompanying drawings in the embodiments of this application. Clearly, the described embodiments are some rather than all of the embodiments of this application. All other embodiments obtained by a person of ordinary skill in the art based on the embodiments of this application without creative efforts shall fall within the protection scope of this application.

In this specification, the term "and/or" is merely an association relationship for describing associated objects, and indicates that three relationships may exist. For example, A and/or B may indicate the following three cases: Only A exists, both A and B exist, and only B exists.

The terms "first", "second", and the like in this specification and claims of the embodiments of this application are used to distinguish between different objects, and are not used to describe a specific sequence of the objects. For example, a first target object, a second target object, and the like are used to distinguish between different target objects, and are not used to describe a specific sequence of the target objects.

In the embodiments of this application, words such as "example" or "for example" are used to indicate an example, illustration, or description. Any embodiment or design solution described as an "example" or "for example" in the embodiments of this application should not be explained as being more preferred or having more advantages than other embodiments or design solutions. Exactly, use of the words such as "example" or "for example" is intended to present a related concept in a specific manner.

In the descriptions of the embodiments of this application, unless otherwise stated, "a plurality of" means two or more. For example, "a plurality of processing units" means two or more processing units, and "a plurality of systems" means two or more systems.

In the descriptions of the embodiments of this application, a name of each indication and/or command and/or instruction and/or information and/or signaling and/or message is merely an example, and may be replaced with another name based on an actual scenario in a specific implementation process. For noun explanations of names and terms in actual implementation, refer to explanations in a 3rd generation partnership project (3rd generation partnership project, 3GPP) standard protocol. The uppercase and lowercase letters and spaces in the embodiments of this application are merely examples, and are specifically subject to stipulations in a standard protocol.

In a communication system, user equipment (User Equipment, UE) may communicate with a current access network to make a call as a caller or callee. A communication entity of the current access network may include a radio access network (RAN) device such as a 3G base station, a 4G base station, a 5G base station, or a 6G base station, a core network device related to the radio access network device, and the like. In the embodiments of this application, the core network device may include one device in a core network, or the core network device may include a plurality of devices in a core network. A signaling transmission interaction process, a voice bearer establishment process, and the like in the embodiments of this application are not limited to interaction between the UE and a base station device, and interaction between base station devices, and should further include another network device in the mobile communication system. For simplicity and ease of understanding, details are not described again.

It should be noted that the core network device and the radio access network device may be different independent physical devices, or a function of the core network device and a logical function of the radio access network device may be integrated into a same physical device, or some functions of the core network device and some functions of the radio access network device may be integrated into one physical device. A terminal device may be at a fixed position or may be movable.

To better understand the technical solutions provided in the embodiments of this application, the following describes a communication environment to which the technical solutions provided in the embodiments of this application can be applied.

First, it should be noted that the embodiments of this application may be applied to a 3rd generation (3rd-Generation, 3G) mobile communication technology network, a 4th generation mobile communication technology (4th-Generation Mobile Communication Technology, 4G) network, a 5th generation mobile communication technology (5th-Generation Mobile Communication Technology) network, or a future next generation mobile communication technology network. For ease of description, the following uses a 4G network architecture as an example for description.

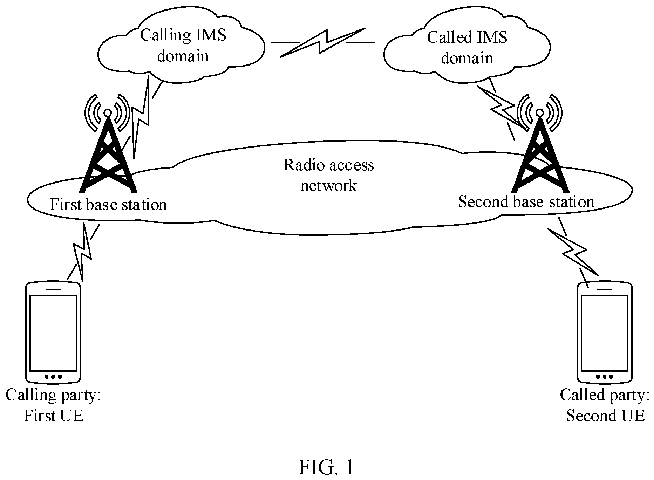

With reference to FIG. 1, first UE and second UE that need to establish a media session need to access a radio access network through base stations in cells in which the first UE and the second UE are respectively located. For example, the first UE accesses the radio access network through a first base station, and the second UE accesses the radio access network through a second base station.

Still with reference to FIG. 1, for example, when the first UE serving as a calling party calls the second UE serving as a called party, that is, when the first UE initiates a call request to the second UE, the first UE transmits the call request to a calling IMS domain over the radio access network accessed through the first base station. The calling IMS domain correspondingly processes the call request initiated by the first UE, and forwards a processed call request to a called IMS domain. The called IMS domain correspondingly processes the call request processed by the calling IMS domain, and delivers the call request to the second UE over the radio access network accessed through the second base station.

Still with reference to FIG. 1, for example, in a process of establishing a media session, a response, signaling, or the like made by the second UE to the call request initiated by the first UE is transmitted to the called IMS domain over the radio access network accessed through the second base station, then transmitted to the calling IMS domain through the called IMS domain, then delivered, through the calling IMS domain, to the radio access network accessed by the first base station, and finally delivered to the first UE over the radio access network accessed by the first base station.

Therefore, interaction between the calling party and the called party in a call service is implemented by using the network architecture shown in FIG. 1.

IMS, that is, IP multimedia subsystem (IP Multimedia Subsystem), described above is a concept proposed by 3GPP, is a universal network architecture for providing multimedia services over IP-based networks, and can provide converged multimedia services and Internet applications for users using different access means. VoLTE and VoNR are currently common voice services using IP data transmission technologies, namely, IMS-based voice services. For ease of description, a VoLTE voice service scenario is used as an example for a call service initiated by the calling party to the called party in the embodiments of this application.

In some implementations, IMS may be referred to as an IMS network. The IMS network may include a calling IMS domain (as shown in FIG. 1) and a called IMS domain (as shown in FIG. 1). Each of the calling IMS domain and the called IMS domain includes an IMS domain core network and an evolved packet core (Evolved Paclet Core, EPC) network. The IMS domain core network may further include a serving-call session control function (serving-call session control function, S-CSCF), an interrogating-call session control function (interrogating-call session control function, I-CSCF), a proxy-call session control function (Proxy-call session control function, P-CSCF), a home subscriber server (home subscriber server, HSS), a session border controller (session border controller, SBC), and several dedicated servers, for example, a multimedia telephony application server (multimedia telephony application server, MMTel AS).

Because all the foregoing network elements are corresponding network elements in a wireless communication network in the conventional technology, interaction and services processed between the network elements are not described in detail in the embodiments. For specific implementation details, refer to a standard protocol.

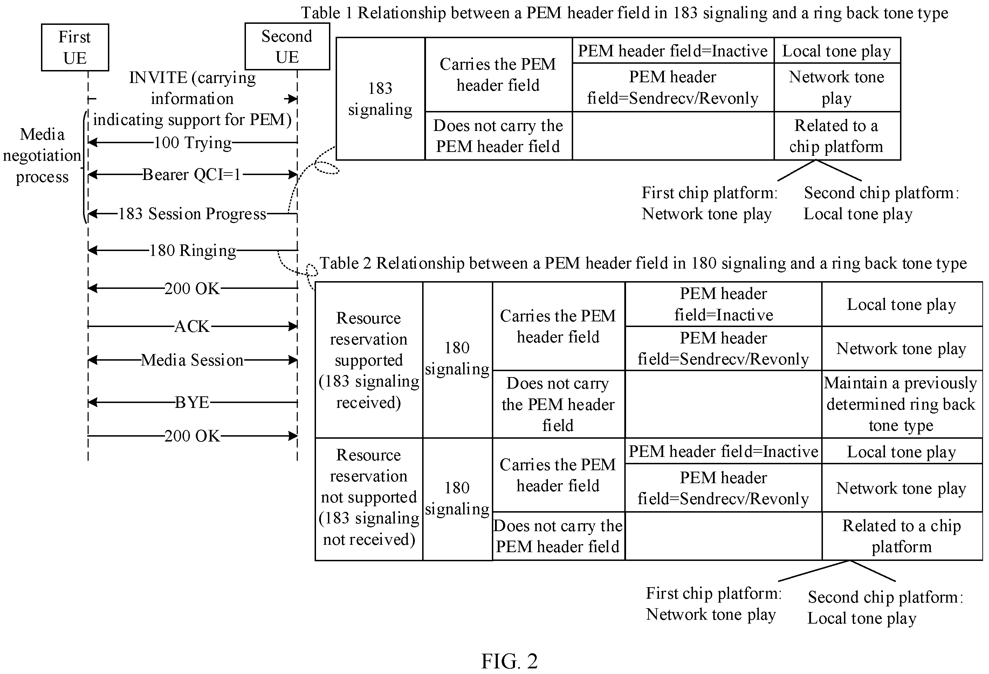

It may be learned from the foregoing descriptions of establishing a media session between the first UE and the second UE in the communication environment shown in FIG. 1 that in a process of establishing a media session between the first UE and the second UE, the radio access network (the first base station and the second base station) and the IMS network (the calling IMS domain and the called IMS domain) are mainly configured to transmit a request, a response, signaling, and the like. When two network side objects, namely, the radio access network and the IMS network, are ignored, a processing procedure of the call service between the calling party and the called party may be shown in FIG. 2.

With reference to FIG. 2, for example, when the first UE (the calling party) needs to establish a media session with the second UE, the first UE initiates a call request or an invitation request to the second UE (the called party). This is specifically implemented by using INVITE signaling (subsequently referred to as INVITE signaling).

It may be understood that an ultimate objective of a call is to enable two users to converse. Usually, media generated by a conversation between the users may be referred to as regular media (Regular Media). However, in an actual application, after the first UE initiates a call to the second UE, the conversation between the two users does not start immediately (or may even not start in the end because the call is unsuccessful). A waiting time usually ranges from several seconds to dozens of seconds, entirely depending on when the second UE answers (answers the call). Before the second UE answers, a media stream may be generated between the first UE and a network. Different from the regular media, media generated in this time period (before the second UE answers) may be referred to as early media (Early Media).

For the early media, a ring back tone (RING BACK TONE, RBT; or CALL BACK TONE, CBT) is most typical. The ring back tone is a ringtone played in a calling terminal when the calling terminal calls a called terminal. In different mobile communication fields, there are different rules for playing the ring back tone. For example, in a circuit switched (Circuit Switch, CS) domain, the ring back tone is usually local to the calling terminal. In a packet switched (Packet Switch, PS) domain, the ring back tone may be provided by a network side.

In addition, a ring back tone packet (a local ring back tone packet and a network ring back tone packet) may include vibration, a color ring back tone, a beep sound, personalized music, a song, a recordings, a video, or the like. This is not limited herein.

For ease of description, in the embodiments, a ring back tone provided by the network side is referred to as a network ring back tone, and play of the network ring back tone is referred to as network tone play; and a locally provided ring back tone (usually a "beep" sound) is referred to as a local ring back tone, and play of the local ring back tone is referred to as local tone play.

It may be understood that in some implementations, after receiving signaling indicating a ring back tone type, the first UE updates a call status to a ring back tone state, and plays a ring back tone based on the ring back tone type indicated by the signaling. For the local ring back tone, after receiving 180 Ringing, the first UE needs to play the local ring back tone. For the network ring back tone, there is no need to pay attention to 180 Ringing. When an audio packet delivered by the network side is received, play of audio data in the audio packet may be started to perform network tone play.

Therefore, to enable the first UE to play a ring back tone in a process of waiting for the second UE to answer the call, when the first UE sends the INVITE signaling to the second UE, information indicating support for the early media needs to be included. In this way, when a network ring back tone (a color ring back tone, for example, music, a song, a story, or a character dialogue) is set for the second UE, the network side may deliver, to the first UE, an audio packet of the network ring back tone that is set for the second UE, so that the first UE can play the network ring back tone that is set for the second UE.

The information that indicates support for the early media and that is included in the INVITE signaling may be implemented by configuring an early media (P-Early-Media, PEM) identifier in the INVITE signaling, and configuring an attribute of the identifier as supported (supported), that is, configuring "P-Early-Media: supported".

Still with reference to FIG. 2, for example, after receiving the INVITE signaling transmitted by the first UE over a corresponding radio access network and IMS network, the second UE may make 100 Trying, that is, a call attempt, to the first UE in a media negotiation process.

It should be noted that in the media negotiation process, 100 Trying made by the second UE is actually made to a core network. After the call attempt between the second UE and the core network succeeds, the core network then makes 100 Trying to the first UE. Because the radio access network and the IMS network are omitted in FIG. 2, 100 Trying shown in FIG. 2 directly points to the first UE from the second UE.

Still with reference to FIG. 2, for example, after the call attempt succeeds, the second UE may establish a bearer required for a current call service with the first UE, for example, establish a bearer whose quality of service class identifier (Quality of Service Class Identifier, QCI) value is 1, that is, the created bearer has QCI=1.

It should be noted that after the call attempt succeeds, the first UE and the second UE establish bearers required for the current call with respective core networks.

Because the radio access network and the IMS network are omitted in FIG. 2, the established bearers shown in FIG. 2 directly points to the second UE and the first UE.

It may be understood that the bearer refers to a network connection and an underlying network resource established between two network nodes, for example, between the first UE and the core network or between the second UE and the core network, to transmit data or signaling. That is, after a bearer is established between the first UE and the core network, and a bearer is established between the second UE and the core network, the first UE and the second UE may exchange data and signaling based on respective corresponding bearers.

It may be understood that QCI is a parameter used by a system to identify a transmission characteristic of a service packet. Different bearer services correspond to different QCI values. For details, refer to stipulations in a standard protocol. Details are not described herein again. In this embodiment, an example in which the QCI value of the bearer that needs to be created between the first UE and the second UE is 1 is used.

Still with reference to FIG. 2, for example, after the bearer between the first UE and the core network is established, the core network may send the audio packet corresponding to the network ring back tone to the first UE through the bearer. For a core network that supports resource reservation, 183 signaling is usually delivered after the bearer is established, and a resource reservation procedure is completed by using a session description protocol (Session Description Protocol, SDP).

To enable the first UE to play the ring back tone as soon as possible, in addition to being used to send an SDP Answer (answer), the 183 signaling may be further used to notify the first UE of whether a ring back tone type that can be played before waiting for the second UE to answer is the network ring back tone or the local ring back tone.

Specifically, when the ring back tone type is determined based on the 183 signaling, the ring back tone type is specifically related to a PEM header field (namely, the foregoing P-Early-Media identifier, which is subsequently uniformly described as a PEM header field). For a relationship between the PEM header field in the 183 signaling and the ring back tone type, refer to Table 1 shown in FIG. 2.

It may be learned from Table 1 that in a possible case, for example, when the 183 signaling includes the PEM header field, and a value in the PEM header field is Inactive ("P-Early-Media: Inactive" is configured in the 183 signaling), in a possible implementation, it may be determined that the ring back tone type is the local ring back tone, that is, the first UE needs to perform local tone play (audio data corresponding to the ring back tone is provided by the first UE).

Still with reference to Table 1, in another possible case, for example, when the 183 signaling includes the PEM header field, but a value in the PEM header field is not Inactive but Sendrecv or Recvonly ("P-Early-Media: Sendrecv" or "P-Early-Media: Recvonly" is configured in the 183 signaling), in a possible implementation, it may be determined that the ring back tone type is the network ring back tone, that is, the first UE needs to perform network tone play (audio data corresponding to the ring back tone is provided by the network side).

Still with reference to Table 1, in another possible case, for example, when the 183 signaling does not include the PEM header field, due to impact of a chip used in the first UE, the ring back tone type may be the network ring back tone or the local ring back tone.

For example, when the used chip (for example, a chip provided by a first chip platform shown in FIG. 2) specifies that the PEM header field is not included, the ring back tone type is the network ring back tone. For such a terminal, in this scenario, the ring back tone type may be determined as the network ring back tone.

For another example, when the used chip (for example, a chip provided by a second chip platform shown in FIG. 2) specifies that the PEM header field is not included, the ring back tone type is the local ring back tone. For such a terminal, in this scenario, the ring back tone type may be determined as the local ring back tone.

It should be understood that the foregoing description is merely an example listed to better understand the technical solution of this embodiment, and is not used as a unique limitation on this embodiment.

Inactive described in this embodiment of this application indicates that an early media function is not supported. It may be understood that when a value of a PEM header field in signaling delivered by the network side is Inactive, it indicates that the network side usually does not send or receive a data stream. Therefore, the calling terminal should not receive an audio packet. In this case, the calling terminal determines the ring back tone type as the local ring back tone.

Sendrecv in this embodiment of this application indicates that bidirectional transmission is allowed, that is, the calling terminal that receives signaling including the value is allowed to send a data stream to the core network, and the calling terminal may be allowed to receive a data stream delivered by the network side, for example, an audio packet corresponding to a network ring back tone.

Recvonly in this embodiment of this application indicates that data is allowed to be received, for example, an audio packet corresponding to a network ring back tone is received.

For directions of media streams indicated by different values of the PEM header field, refer to a standard protocol. Details are not described herein again.

In addition, it should be noted that for the network ring back tone, the audio packet provided by the network side is essentially a network transmission protocol packet, and may be an RTP (Real-time Transport Protocol, real-time transport protocol) packet.

Still with reference to FIG. 2, for example, when the second UE can remind the called party that there is a call, that is, the second UE rings, the second UE sends ringing signaling, for example, 180 Ringing (subsequently referred to as 180 signaling) in FIG. 2.

It may be understood that in addition to being used to notify the first UE that the called terminal (the second UE) is ringing, the 180 signaling may be further used to notify the first UE of whether a ring back tone type that can be played before waiting for the second UE to answer is the network ring back tone or the local ring back tone.

Specifically, when the ring back tone type is determined based on the 180 signaling, the ring back tone type is not only related to a PEM header field, but also related to whether network resource reservation is currently supported (that is, whether 183 signaling is received). For a relationship between the PEM header field in the 180 signaling and the ring back tone type, refer to Table 2 shown in FIG. 2.

It may be learned from Table 2 that regardless of whether the first UE receives the 183 signaling, when the first UE receives the 180 signaling including the PEM header field, and a value in the included PEM header field is Inactive ("P-Early-Media: Inactive" is configured in the 180 signaling), in a possible implementation, it may be determined that the ring back tone type is the local ring back tone, that is, the first UE needs to perform local tone play.

Still with reference to Table 2, regardless of whether the first UE receives the 183 signaling, when the first UE receives the 180 signaling including the PEM header field, but a value in the PEM header field is not Inactive but Sendrecv or Recvonly ("P-Early-Media: Sendrecv" or "P-Early-Media: Recvonly" is configured in the 180 signaling), in a possible implementation, it may be determined that the ring back tone type is the network ring back tone, that is, the first UE needs to perform network tone play.

Still with reference to Table 2, when the first UE receives the 183 signaling, and the first UE receives the 180 signaling that does not include the PEM header field, in a possible implementation, the first UE may maintain a ring back tone type determined based on the 183 signaling, that is, does not change the ring back tone type. When the ring back tone type determined based on the 183 signaling is the network ring back tone, the first UE still maintains the network ring back tone. When the ring back tone type determined based on the 183 signaling is the local ring back tone, the first UE still maintains the local ring back tone.

Still with reference to Table 2, when the first UE does not receive the 183 signaling, and the first UE receives thee 180 signaling that does not include the PEM header field, due to impact of a chip used in the first UE, the ring back tone type may be the network ring back tone or the local ring back tone.

For example, when the used chip (for example, a chip provided by a first chip platform shown in FIG. 2) specifies that the PEM header field is not included, the ring back tone type is the network ring back tone. For such a terminal, in this scenario, the ring back tone type may be determined as the network ring back tone.

For another example, when the used chip (for example, a chip provided by a second chip platform shown in FIG. 2) specifies that the PEM header field is not included, the ring back tone type is the local ring back tone. For such a terminal, in this scenario, the ring back tone type may be determined as the local ring back tone.

It should be understood that the foregoing description is merely an example listed to better understand the technical solution of this embodiment, and is not used as a unique limitation on this embodiment.

Still with reference to FIG. 2, for example, if the call service continues normally, the second UE makes a 200 OK success response (a final response to INVITE signaling) to the first UE. Correspondingly, after receiving 200 OK made by the second UE, the first UE makes an ACK response to the second UE, that is, notifies the second UE that the first UE has received the final response of the second UE to the INVITE signaling.

Still with reference to FIG. 2, for example, after the first UE makes the ACK response to the second UE, a media session (Media Session) between the first UE and the second UE is successfully established. In this case, the first UE may communicate with the second UE.

Still with reference to FIG. 2, for example, if the second UE first performs a hang-up operation after the call is lasted for specific duration, the second UE initiates a BYE instruction to the first UE, to terminate the established call. Correspondingly, after receiving the BYE instruction, the first UE ends the call with the second UE, and sends a 200 OK response to the second UE, to notify the second UE that the first UE has received an end instruction of the second UE for the current session. In this way, the session is ended.

It may be understood that the BYE instruction may alternatively be initiated by the first UE to the second UE, that is, a calling user first performs a hang-up operation by using the first UE. Correspondingly, the 200 OK response for confirming end of the current session is made by the second UE.

Therefore, normal call service processing between the first UE and the second UE is completed.

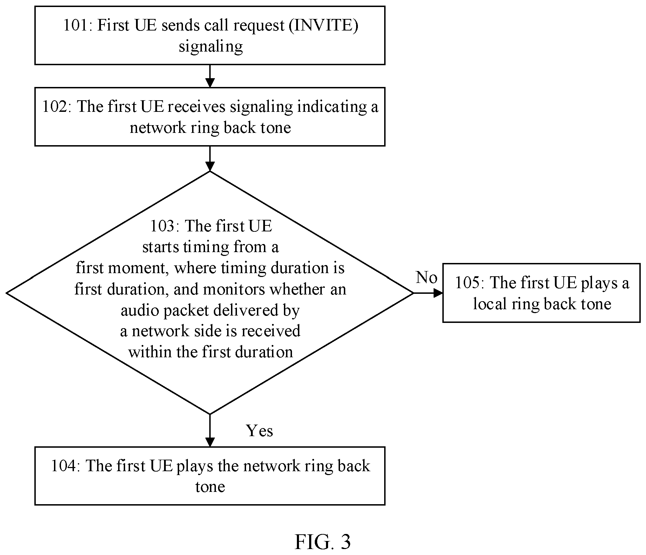

It may be learned from the foregoing description that processing logic for playing a ring back tone is mainly completed by a calling terminal that initiates a call request. Therefore, in a possible implementation, processing logic of the calling terminal in a call service may be shown in FIG. 3.

101: First UE sends call request (INVITE) signaling.

Specifically, the first UE sends the INVITE signaling to a network side.

Optionally, the first UE sends the INVITE signaling to a first base station, and then the first base station sends the INVITE signaling to a corresponding core network device.

For example, the INVITE signaling may include "P-Early-Media: supported" information, that is, may include information indicating support for PEM. In specific implementation, for example, "P-Early-Media: supported" may be configured in an SDP in the INVITE signaling, to include the information indicating support for the PEM.

102: The first UE receives signaling indicating a network ring back tone.

Optionally, in a process of waiting for second UE to answer a call, the first UE receives a message indicating the network ring back tone.

It may be understood that in the process of waiting for the second UE to answer the call, the first UE receives signaling that can indicate a ring back tone type, for example, 183 signaling or 180 signaling. The 183 signaling is usually 1st signaling that can indicate the ring back tone type and that is delivered by the network side after the first UE initiates a call request. The 180 signaling is last signaling that can indicate the ring back tone type and that is delivered by the network side.

In addition, it should be further understood that play of a local ring back tone needs to be started after 180 signaling indicating local tone play is received. For the network ring back tone, there may be no need to pay attention to the 180 signaling, and an audio packet corresponding to the network ring back tone is received.

For details of determining, based on the 183 signaling and the 180 signaling, whether the ring back tone type is the network ring back tone, refer to Table 1 and Table 2 shown in FIG. 2. Details are not described herein again.

In addition, it should be noted that in an actual application, the first UE may alternatively determine the ring back tone type based on other signaling that can indicate the ring back tone type, for example, determine the ring back tone type based on Update signaling (signaling for sending an update message by a user) received before the 180 signaling. In a possible implementation, a relationship between a PEM header field in the Update signaling and the ring back tone type may be the same as a relationship between a PEM header field in the 180 signaling and the ring back tone type. For details, refer to Table 2 shown in FIG. 2. Details are not described herein again.

103: The first UE starts timing from a first moment, where timing duration is first duration, and monitors whether an audio packet delivered by the network side is received within the first duration.

It should be noted that usually, after the first UE receives the signaling indicating network tone play, the network side delivers the audio packet corresponding to the network ring back tone to the first UE. To ensure user experience and avoid a case in which the first UE always cannot play a ring back tone due to waiting for the audio packet corresponding to the network ring back tone for a long time, in a possible implementation, it may be set that the first UE starts timing from the first moment at which the message indicating the network ring back tone is received.

Optionally, the timing duration may be the first duration, for example, 2s.

In this way, the first UE may monitor whether the audio packet that corresponds to the network ring back tone and that is delivered by the network side is received within the first duration, for example, 2s.

Optionally, it may be set that when the first UE receives, within the first time, the audio packet delivered by the network, network tone play is performed, and audio data in the audio packet is played, that is, step 104 is performed. Otherwise, when the first UE does not receive, within the first time, the audio packet delivered by the network, local tone play is performed, and audio data stored in a local storage medium of the first UE is played, that is, step 105 is performed.

Optionally, in an implementation, it may be set that after the first UE receives the signaling indicating network tone play, a 2s timer is started. When the audio packet delivered by the network side is received within the timing duration of the timer, step 104 is performed. On the contrary, step 105 is performed.

104: The first UE plays the network ring back tone.

Optionally, when the first UE plays the network ring back tone, a value of a field, for example, a CID, that identifies the ring back tone type in obtained log information is 1. That is, when CID=1, it indicates that the ring back tone played by the first UE is the network ring back tone.

105: The first UE plays the local ring back tone.

Optionally, when the first UE plays the local ring back tone, a value of a field, for example, a CID, that identifies the ring back tone type in obtained log information is -1. That is, when CID=-1, it indicates that the ring back tone played by the first UE is the local ring back tone.

In addition, it should be noted that in a scenario in which the first UE calls the second UE, when the first UE determines the ring back tone type based on the signaling that indicates the ring back tone type and that is fed back by the core network, and starts to play the ring back tone, a prompt indicating that the other party is ringing may be further displayed in a user interface of the first UE, as shown in (1) in FIG. 4A. That is, the user interface of the first UE may display prompt information indicating that the other party is ringing, and an earpiece or a speaker of the first UE plays a ring back tone sound.

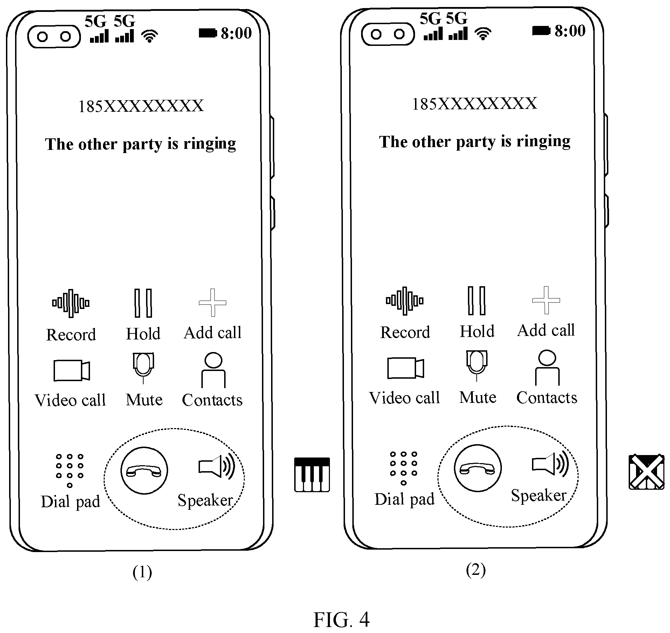

However, in a scenario in which the ring back tone type is the network ring back tone, the ring back tone played by the first UE may have no sound because all the audio data in the audio packet delivered by the network side is silent frames (namely, audio frames without a sound). As shown in (2) in FIG. 4, only the prompt information indicating that the other party is ringing is displayed in the user interface of the first UE, but there is no sound in the earpiece or the speaker. In this case, a user mistakenly considers that the call fails, affecting user experience.

In view of this, embodiments of this application provide a ring back tone play method. In the method, for a scenario in which a ring back tone is provided by a network side, a calling terminal monitors whether an audio packet provided by the network side is received within a specified time, determines whether data in the audio packet is a silent frame, and then determines whether to continue to play the network ring back tone or change to play a local ring back tone. This can ensure that the calling terminal can play the ring back tone in a timely manner and prompt a user.

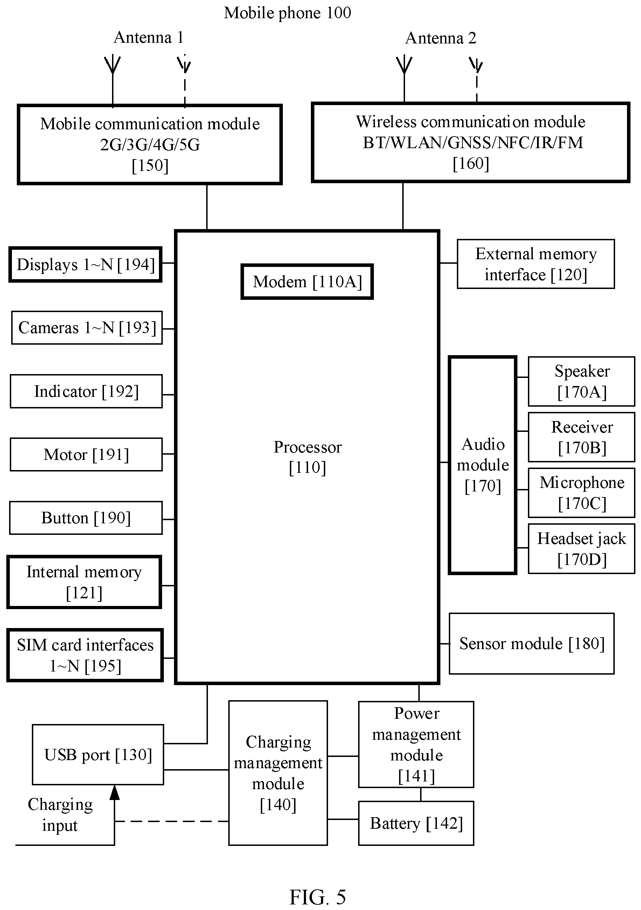

To better understand the ring back tone play method provided in the embodiments of this application, the following first describes, with reference to FIG. 5, a hardware structure of a terminal device to which the method is applicable.

FIG. 5 is an example schematic diagram of a hardware structure of a terminal device 100 for implementing a ring back tone play method according to an embodiment of this application.

It should be noted that the terminal device may also be described as user equipment (User Equipment, UE). Specifically, in this embodiment, the terminal device refers to a user registered with an IMS network, and may include a mobile terminal, a fixed terminal, a SIP soft terminal, or the like.

SIP refers to Session Initiation Protocol (Session initialization Protocol). SIP is a multimedia communication protocol formulated by the Internet Engineering Task Force (Internet Engineering Task Force, IETF). It is a text-based application layer control protocol used to create, modify, and release sessions of one or more participants.

It should be understood that the foregoing description is merely an example listed to better understand the technical solution of this embodiment, and is not used as a unique limitation on this embodiment.

For ease of description, in this embodiment, a mobile terminal such as a mobile phone is used as an example to describe the hardware structure of the terminal device 100.

With reference to FIG. 5, for example, the mobile phone 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identification module, SIM) card interface 195, and the like.

The antenna 1 and the antenna 2 are configured to transmit and receive electromagnetic wave signals.

Specifically, in the embodiments of this application, INVITE signaling, 100 Trying, 183 Session Progress, 180 Ringing, 200 OK, ACK, BYE, an audio packet, or the like sent or received by the terminal device 100 may be implemented through the antenna 1 or the antenna 2.

Still with reference to FIG. 5, for example, the mobile communication module 150 may provide a wireless communication solution that is applied to the terminal device 100 and that includes 2G/3G/4G/5G and the like. The wireless communication module 160 may provide a wireless communication solution that is applied to the terminal device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), infrared (infrared, IR), and the like.

For example, in some implementations, in the terminal device 100, the antenna 1 is coupled to the mobile communication module 150, and the antenna 2 is coupled to the wireless communication module 160, so that the terminal device 100 can communicate with a network and another device by using a wireless communication technology.

Still with reference to FIG. 5, for example, the audio module 170 in the terminal device 100 includes a speaker 170A, a receiver 170B, a microphone 170C, a headset jack 170D, and the like.

For example, the terminal device 100 may implement an audio function by using the speaker 170A, the receiver 170B, the microphone 170C, and the headset jack 170D that are in the audio module 170, an application processor, and the like, for example, play audio data of a network ring back tone or audio data of a local ring back tone in the embodiments of this application.

In addition, in some embodiments, the sensor module 180 in the terminal device 100 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like, which are not listed one by one herein. This is not limited in this application.

In addition, it should be noted that the processor 110 may include one or more processing units in some implementations. For example, the processor 110 may include an application processor (application processor, AP), a modem processor (Modem), a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like.

It may be understood that in specific implementation, different processing units may be separate devices or may be integrated into one or more processors.

In addition, it should be further noted that in some implementations, the controller may be a nerve center and a command center of the terminal device 100. In an actual application, the controller may generate an operation control signal based on instruction operation code and a timing signal, to complete control of instruction fetching and instruction execution.

In addition, it should be further noted that in some implementations, a memory may be further disposed in the processor 110, to store instructions and data. In some implementations, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In addition, it should be further noted that in some implementations, the processor 110 may further include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

Still with reference to FIG. 5, for example, the charging management module 140 is configured to receive a charging input from a charger. When charging the battery 142, the charging management module 140 may further supply power to the terminal device through the power management module 141.

Still with reference to FIG. 5, for example, the power management module 141 is configured to be connected to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a quantity of battery cycles, and a battery health status (leakage or impedance). In some other implementations, the power management module 141 may alternatively be disposed in the processor 110. In some other implementations, the power management module 141 and the charging management module 140 may alternatively be disposed in a same device.

Still with reference to FIG. 5, for example, a wireless communication function of the terminal device 100 may be implemented by using the antenna 1, the antenna 2, the mobile communication module 150, the wireless communication module 160, the Modem 110A, and the like. Specifically, in the technical solutions provided in the embodiments of this application, after a call service is initiated, processing logic for playing a ring back tone may be implemented by using these modules.

In addition, the terminal device 100 shown in FIG. 5 may implement a display function by using the GPU, the display 194, the application processor, and the like, for example, display a user interface in (1) in FIG. 4 or (2) in FIG. 4.

In addition, the terminal device 100 may implement a shooting function by using the ISP, the camera 193, the video codec, the GPU, the display 194, the application processor, and the like.

In addition, the external memory interface 120 shown in FIG. 5 may be configured to be connected to an external memory card, for example, a Micro SD card, to extend a storage capability of the terminal device 100. The external memory card communicates with the processor 110 through the external memory interface 120, to implement a data storage function.

In addition, the internal memory 121 shown in FIG. 5 may be configured to store computer-executable program code. The executable program code includes instructions. The processor 110 runs the instructions stored in the internal memory 121, to perform various functional applications and data processing of the terminal device 100.

Specifically, in the technical solutions provided in the embodiments of this application, audio data corresponding to the local ring back tone and related instructions for implementing the ring back tone play method may be prestored in the internal memory 121. The processor 110 executes the instructions stored in the internal memory 121, to enable the terminal device 100 to perform the ring back tone play method provided in the embodiments of this application.

Still with reference to FIG. 5, for example, the button 190 includes a power-on/off button, a volume button, or the like. The button 190 may be a mechanical button, or may be a touch button. The motor 191 may generate a vibration prompt. The indicator 192 may be an indicator light, and may be configured to indicate a charging status, a power change, and the like, or may be configured to indicate a message, a missed call, a notification, and the like.

Still with reference to FIG. 5, for example, the SIM card interface 195 is configured to be connected to a SIM card or a USIM card. The SIM card may be inserted into the SIM card interface 195 or removed from the SIM card interface 195, to implement contact with and separation from the terminal device 100. The terminal device 100 may support one or N (N is an integer greater than 1) SIM card interfaces 195. That is, a plurality of SIM cards or USIM cards may be inserted into the terminal. Specifically, in the technical solutions provided in the embodiments, VoLTE is implemented based on the SIM card or the USIM card.

The hardware structure of the terminal device 100 is not further described. It should be understood that the terminal device 100 shown in FIG. 5 is merely an example. In specific implementation, the terminal device 100 may have more or fewer components than those shown in the figure, may combine two or more components, or may have different component configurations. The components shown in FIG. 5 may be implemented in hardware including one or more signal processing circuits and/or application-specific integrated circuits, software, or a combination of hardware and software.

A terminal device with the hardware structure shown in FIG. 5 is used as an example. For the communication environment shown in FIG. 1, a 4G network architecture is still used as an example to describe in detail a procedure in which the terminal device implements the ring back tone play method provided in this application.

It should be noted that a call service needs to be implemented based on processing of a Modem protocol stack. Therefore, when the ring back tone play method provided in the embodiments of this application is implemented, a strategy, processing logic, and the like that are followed by the terminal device may be set in the Modem protocol stack. That is, in the ring back tone play method provided in the following embodiments, all operations performed by a calling terminal (for example, first UE) are completed in the Modem protocol stack.

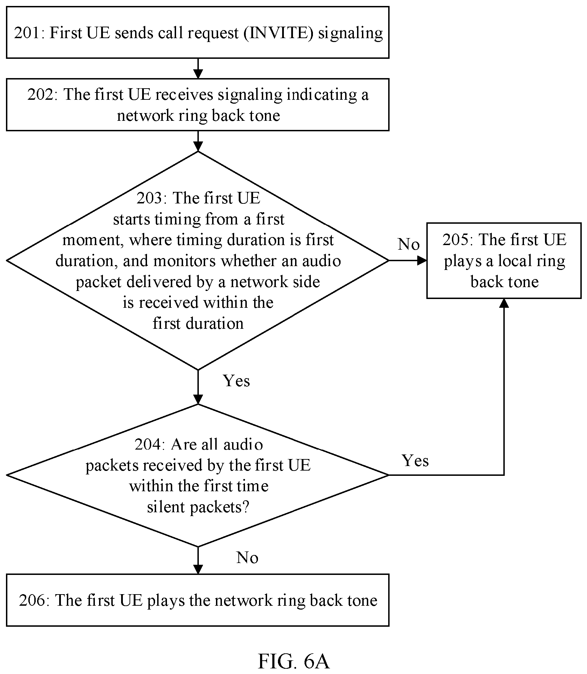

With reference to FIG. 6A, a ring back tone play method provided in an embodiment of this application specifically includes the following steps.
201: First UE sends call request (INVITE) signaling.

Specifically, the first UE sends the INVITE signaling to a network side.

Optionally, the first UE sends the INVITE signaling to a first base station, and then the first base station sends the INVITE signaling to a corresponding core network device.

For example, the INVITE signaling may include "P-Early-Media: supported" information, that is, may include information indicating support for PEM. In specific implementation, for example, "P-Early-Media: supported" may be configured in an SDP in the INVITE signaling, to include the information indicating support for the PEM.

202: The first UE receives signaling indicating a network ring back tone.

Optionally, in a process of waiting for second UE to answer a call, the first UE receives a message indicating the network ring back tone.

It may be understood that the first UE is in a process of waiting for the second UE to answer a call corresponding to the INVITE signaling initiated in step 201.

It may be understood that in the process of waiting for the second UE to answer the call, the first UE receives signaling that can indicate a ring back tone type, for example, 183 signaling or 180 signaling. The 183 signaling is usually 1st signaling that can indicate the ring back tone type and that is delivered by the network side after the first UE initiates a call request. The 180 signaling is last signaling that can indicate the ring back tone type and that is delivered by the network side.

In addition, it should be further understood that play of a local ring back tone needs to be started after 180 signaling indicating local tone play is received. For the network ring back tone, there may be no need to pay attention to the 180 signaling, and an audio packet corresponding to the network ring back tone is received.

For details of determining, based on the 183 signaling and the 180 signaling, whether the ring back tone type is the network ring back tone, refer to Table 1 and Table 2 shown in FIG. 2. Details are not described herein again.

In addition, it should be noted that in an actual application, the first UE may alternatively determine the ring back tone type based on other signaling that can indicate the ring back tone type, for example, determine the ring back tone type based on Update signaling (signaling for sending an update message by a user) received before the 180 signaling. In a possible implementation, a relationship between a PEM header field in the Update signaling and the ring back tone type may be the same as a relationship between a PEM header field in the 180 signaling and the ring back tone type. For details, refer to Table 2 shown in FIG. 2. Details are not described herein again.

203: The first UE starts timing from a first moment, where timing duration is first duration, and monitors whether an audio packet delivered by the network side is received within the first duration.

It may be learned from the foregoing description that in a scenario in which the ring back tone type is the network ring back tone, the audio packet corresponding to the network ring back tone may not arrive at the first UE in a timely manner due to some exceptions. To not affect user experience, a proper time, for example, 1s or 2s, may be set based on a service requirement, a requirement of a chip used in the first UE, or the like. In addition, it is specified that when the audio packet corresponding to the network ring back tone is not received within the specified time (the first time), the ring back tone type is changed from the network ring back tone to the local ring back tone in a timely manner. Because audio data corresponding to the local ring back tone is prestored in a local storage medium of the first UE, as described in the internal memory 121, the first UE may directly play the audio data. Therefore, after the signaling indicating the network ring back tone is received, a timer whose timing duration is 1s or 2s may be directly started, and then it is set that when the audio packet delivered by the network is not received within the timing duration corresponding to the timer, step 205 is performed. On the contrary, when the audio packet delivered by the network is received within the timing duration corresponding to the timer, step 204 is performed to detect whether the received audio packet is a silent packet, so as to avoid a case in which the audio packet is received within the specified time, but all received audio packets are silent packets, and consequently the first UE still cannot play a ring back tone sound.

It should be noted that for the signaling that indicates the network ring back tone type and that is received before the 180 signaling, for example, the 183 signaling or the Update signaling, due to impact of the chip, when 183 signaling or Update signaling that does not include a PEM header field is received, it may be indicated, by default, that the ring back tone type is the network ring back tone (case 1), or it may be indicated, by default, that the ring back tone type is the local ring back tone (case 2). Therefore, for the two cases, processing logic for playing the ring back tone provided in this embodiment of this application may be different.

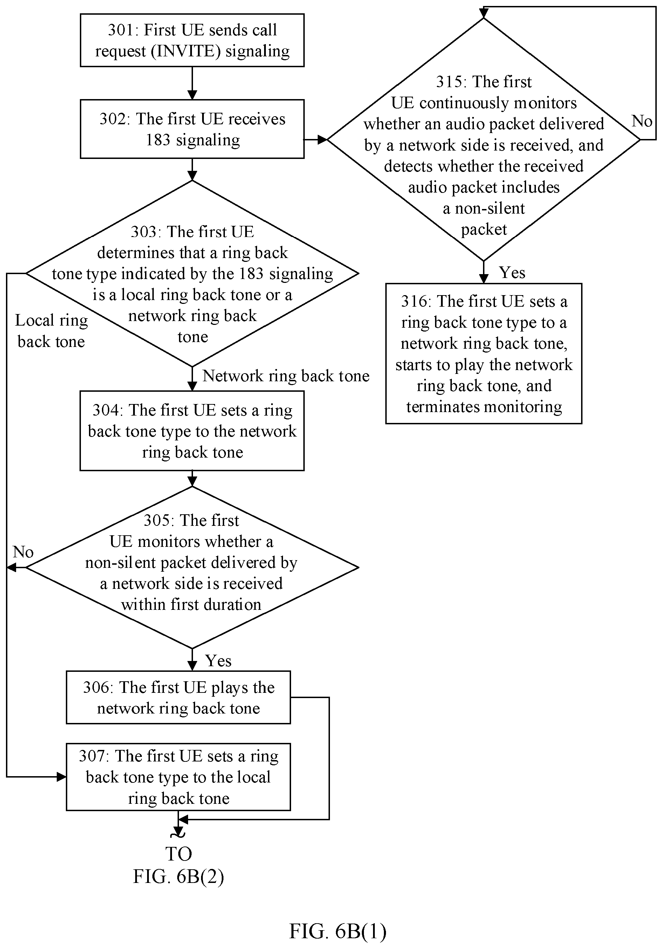

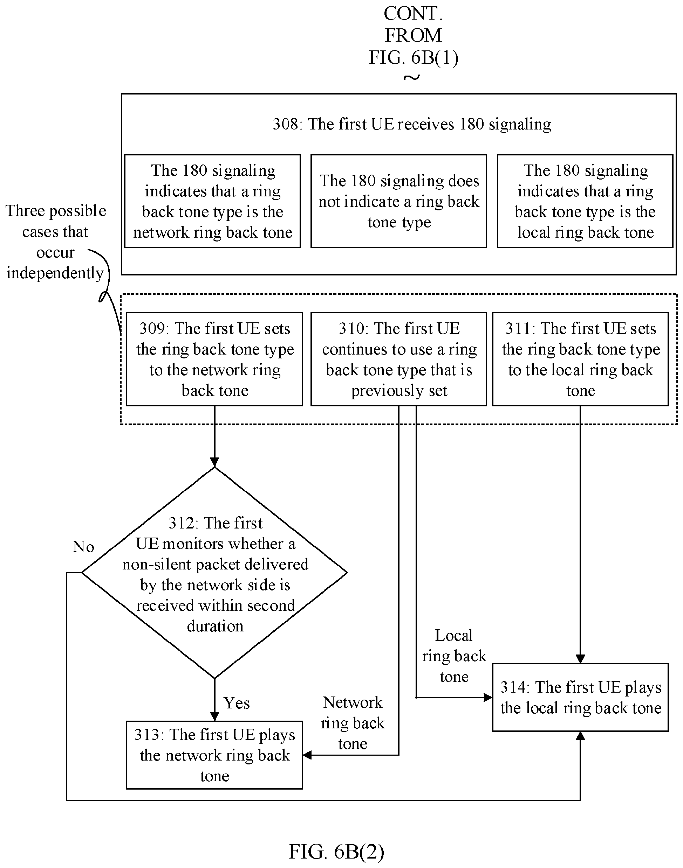

Specifically, for the case 1, determining logic shown in FIG. 6A may be directly used. For the case 2, determining logic shown in FIG. 6B(1) and FIG. 6B(2) may be directly used. Details are not described herein again.

204: Determine whether all audio packets received by the first UE within the first time are silent packets.

In the embodiment shown in FIG. 3, attention is paid only to whether the audio packet corresponding to the network ring back tone is received within the timing time corresponding to the started timer. Therefore, if the audio packet is received within the timing time (the first time), network tone play is directly performed, and no attention is paid to whether all data in the audio packet is a silent frame. Consequently, when all audio packets are silent packets, the first UE cannot play a ring back tone sound, affecting user experience. Therefore, in this embodiment of this application, not only attention is paid to whether the audio packet is received within the timing time, but also attention is paid to whether all the audio packets received within the timing time are silent packets, that is, whether a sound cannot be played.

Specifically, in this embodiment, when the first UE receives the audio packet within the timing time, and all the received audio packets are silent packets, the ring back tone type is directly changed to the local ring back tone. In this way, the first UE can directly read the audio data corresponding to the local ring back tone from the local storage medium for play, that is, step 205 is performed. Otherwise, when there is a non-silent packet in the audio packet received within the timing time, that is, provided that an audio packet with a sound is received within the timing time, regardless of whether audio is continuous, the network ring back tone is played, that is, step 206 is performed.

For an operation of determining whether the audio packet received from the network side is a silent packet, in some implementations, it may be determined, by determining whether a frame type (Frame Type, FT) flag bit included in the received audio packet is a predetermined silent value, whether the entire audio packet is a silent packet.

For example, a sound coding file format used for the audio packet is adaptive multi-rate (Adaptive Multi-Rate, AMR, or may be referred to as AMR-NB) or adaptive multi-rate wideband (Adaptive Multi-Rate Wideband, AMR-WB). An audio packet in each of the two formats includes an FT flag bit, and a specific value of an FT flag bit corresponding to the silent packet is defined. For example, a silent value defined for an audio packet in the AMR-NB format is 8. A silent value defined for an audio packet in the AMR-WB format is 9. For details, refer to standard protocols corresponding to the two sound coding file formats. Details are not described herein again.

That is, for the audio packet in the AMR-NB format, when a value of an included FT flag bit is 8, it indicates that the audio packet is a silent packet. Otherwise, it may be considered that there is an audio frame whose sound can be played in the audio packet. For the audio packet in the AMR-WB format, when a value of an included FT flag bit is 9, it indicates that the audio packet is a silent packet. Otherwise, it may be considered that there is an audio frame whose sound can be played in the audio packet.

It should be understood that the foregoing description is merely an example listed to better understand the technical solution of this embodiment, and is not used as a unique limitation on this embodiment. In an actual application, if the received audio packet is in another sound coding format, for example, enhanced voice services (Enhance Voice Services, EVS), a flag bit that can identity whether an audio packet is a silent packet may be determined based on a standard protocol of the EVS format, and then it is determined, based on a value of the flag bit, whether the audio packet is a silent packet.

In addition, it should be noted that in some possible implementations, the audio packet of the network ring back tone delivered by the network side is delivered to the first UE based on a real-time transport protocol (Real-time Transport Protocol, RTP). Therefore, the audio packet may also be referred to as an RTP packet.

Optionally, in some possible implementations, RTP includes, for example, an audio packet (subsequently referred to as an NALDBG audio packet) that may be named "NALDBG".

Optionally, in a possible implementation, when it is determined whether the audio packet is a silent packet, it may be determined, based on a length of the NALDBG audio packet, whether the audio packet is a silent packet.

Optionally, when the length of the NALDBG audio packet is 15~25 (including endpoint values), it may be determined that the audio packet is a silent packet.

Optionally, in a possible implementation, the length may be, for example, 17, 18, 19, or 21, that is, may be any value in 15~25.

It should be understood that the foregoing description is merely an example listed to better understand the technical solution of this embodiment, and is not used as a unique limitation on this embodiment.

In addition, it should be further noted that in some other possible implementations, attention may not be paid to the name of the audio packet. When a data packet delivered by the network side based on the real-time transport protocol is received, the data packet may be used as the audio packet of the network ring back tone.

In addition, it should be further noted that in a possible implementation, it may be determined, based on a packet type of the audio packet, whether the audio packet is a silent packet.

Optionally, when the packet type of the audio packet is a preset packet type, it is determined that the audio packet is a silent packet. In this case, the first UE may play the local ring back tone.

Optionally, in a possible implementation, the preset packet type is SID (COMFORT NOISE FRAME).

205: The first UE plays the local ring back tone.

It should be noted that for the local ring back tone, local tone play can be started only after 180 signaling is received. Therefore, when the received signaling indicating the network ring back tone is 180 signaling, when no audio packet is received within the specified time or all the received audio packets are silent packets, the first UE may directly perform local tone play.

For example, for a scenario in which the received signaling indicating the network ring back tone is other signaling, for example, 183 signaling or Update signaling, or other signaling that can indicate the ring back tone type, when no audio packet is received within the specified time or all the received audio packets are silent packets, the first UE needs to wait for 180 signaling after changing the ring back tone type to local tone play.

It may be understood that only when the 180 signaling is received and a network type indicated by the 180 signaling is also the local ring back tone, the first UE can perform local tone play. When the network type indicated by the 180 signaling is the network ring back tone, the ring back tone type needs to be changed to the network ring back tone again, and further it is monitored whether an audio packet that is not a silent packet is received within a specified time, that is, determining in step 203 and step 204 needs to be performed again. When it is determined that no audio packet is received or all received audio packets are silent packets within the specified time, the first UE changes the ring back tone type to the local ring back tone again, and then performs local tone play.

206: The first UE plays the network ring back tone.

It should be noted that to avoid endless cyclic determining, it may be set that determining logic in step 203 and step 204 shown in FIG. 6A is executed only once after a calling terminal receives the 180 signaling.

It should be understood that the foregoing description is merely an example listed to better understand the technical solution of this embodiment, and is not used as a unique limitation on this embodiment. In an actual application, a quantity of determining times may be set based on a service requirement.

Therefore, for a scenario in which the ring back tone type is the network ring back tone, that is, audio data of a ring back tone to be played is provided by the network side, the first UE monitors whether the audio packet provided by the network side is received within the specified time, determines whether each received audio packet is a silent packet, and then determines whether to continue to play the network ring back tone or change to play the local ring back tone. This can ensure that the first UE can play the ring back tone in a timely manner and prompt the user.

With reference to FIG. 6B(1) and FIG. 6B(2), an embodiment of this application provides a ring back tone play method for the foregoing case 2. The method specifically includes the following steps.

301: First UE sends call request (INVITE) signaling.

Step 301 in this embodiment is similar to step 101 and step 102 in the foregoing embodiment. For specific details, refer to the foregoing embodiment. Details are not described herein again.

302: The first UE receives 183 signaling.

Optionally, the first UE receives the 183 signaling delivered by a network side.

303: The first UE determines whether a ring back tone type indicated by the 183 signaling is a local ring back tone or a network ring back tone.

For details of determining, based on the 183 signaling, whether a ring back tone type is the network ring back tone, refer to Table 1 shown in FIG. 2. In this embodiment, an example in which the first UE uses a chip on a second chip platform is used (that is, when the 183 signaling does not include a PEM header field, it indicates local tone play). Details are not described herein again.

304: The first UE sets the ring back tone type to the network ring back tone.

Optionally, when the 183 signaling indicates that the ring back tone type is the network ring back tone, that is, PEM header field=Sendrecv/Revonly, the first UE sets the ring back tone type to the network ring back tone.

305: The first UE monitors whether a non-silent packet delivered by the network side is received within first duration.

That is, logic in step 203, step 204, and step 205 in FIG. 6A is executed. Details are not described herein again.

306: The first UE plays the network ring back tone.

Optionally, when receiving, within the first duration, the non-silent packet delivered by the network side, the first UE plays the network ring back tone, that is, plays audio data in the non-silent packet.

307: The first UE sets the ring back tone type to the local ring back tone.

Optionally, when the 183 signaling indicates that the ring back tone type is the local ring back tone, that is, PEM=Inactive, or the PEM header field is not included, the first UE sets the ring back tone type to the local ring back tone.

308: The first UE receives 180 signaling.

It may be understood that based on Table 2 in FIG. 2, when the 183 signaling is received before the 180 signaling, there are three cases in which the 180 signaling indicates a ring back tone type. Specifically, the three cases include a case (subsequently referred to as a case 2.1) in which the 180 signaling indicates that the ring back tone type is the network ring back tone, that is, PEM header field=Sendrecv/Revonly; a case (subsequently referred to as a case 2.2) in which the 180 signaling indicates that the ring back tone type is the local ring back tone, that is, PEM=Inactive; and a case (subsequently referred to as a case 2.3) in which the 180 signaling does not indicate the ring back tone type, that is, the PEM header field is not included.

In a scenario of the case 2.1, the first UE performs step 309. In a scenario of the case 2.2, the first UE performs step 310. In a scenario of the case 2.3, the first UE performs step 311.

It may be understood that the case 2.1, the case 2.2, and the case 2.3 are three cases that occur independently.

309: The first UE sets the ring back tone type to the network ring back tone.

310: The first UE continues to use a ring back tone type that is previously set.

311: The first UE sets the ring back tone type to the local ring back tone.

312: The first UE monitors whether a non-silent packet delivered by the network side is received within third duration.

That is, logic in step 203, step 204, and step 205 in FIG. 6A is executed. Details are not described herein again.

313: The first UE plays the network ring back tone.

314: The first UE plays the local ring back tone.

In addition, it should be noted that for the scenario of the case 2 (the first UE uses the chip on the second chip platform), even if play of the local ring back tone is started when the 180 signaling is received, before call acceptance (200 OK) signaling is received, provided that an audio packet that corresponds to the network ring back tone and that is delivered by the network side is received, the ring back tone type is changed to the network ring back tone, and then the network ring back tone is played. Therefore, in a process in which the first UE performs step 302 to step 314, the first UE further performs step 315.

315: The first UE continuously monitors whether an audio packet delivered by the network side is received, and detects whether the received audio packet is a non-silent packet.

Optionally, after receiving the 183 signaling, and before receiving the 200 OK signaling, the first UE may continuously monitor whether the audio packet delivered by the network side is received, and detect whether the received audio packet is a non-silent packet.

Specifically, when detecting the non-silent packet delivered by the network side, the first UE may perform step 316. Otherwise, the first UE may continue to monitor whether an audio packet delivered by the network side is received, and detect whether the received audio packet is a non-silent packet, until the 200 OK signaling is received.

316: The first UE sets a ring back tone type to a network ring back tone, starts to play the network ring back tone, and terminates monitoring.

That is, after receiving, in step 315, the non-silent packet delivered by the network side, the first UE terminates the monitoring. That is, logic in step 315 and step 316 is executed only once, and subsequently the ring back tone type is set based on received signaling that can indicate a ring back tone type, and a corresponding ring back tone is played.

Therefore, for a scenario in which signaling received before the 200 OK signaling indicates the local ring back tone, the first UE monitors whether an audio packet is received before the 200 OK signaling, changes the ring back tone type to the network ring back tone in a timely manner when receiving the audio packet, determines whether each audio packet received within a specified time is a silent packet, and then determines whether to continue to play the network ring back tone or change to play the local ring back tone. This can ensure that the first UE can play the ring back tone in a timely manner and prompt a user.

To better understand the ring back tone play method provided in the embodiments of this application, a 4G network architecture is still used as an example. The following uses several specific scenarios for description.

Before the ring back tone play method provided in the embodiments of this application is described, a specific object that performs the operation in a calling terminal is first described. It may be learned from the foregoing description that a call service needs to be implemented based on processing of a Modem protocol stack, and is specifically implemented in a session initiation protocol (SIP) module in the Modem protocol stack. It may be understood that in the Modem protocol stack, the SIP module is specifically located at an IMS protocol layer (which may also be referred to as an IMS module). In the embodiments, the IMS module is used as an example.

In addition, it may be learned from the foregoing description of the hardware structure of the terminal device that a ring back tone is specifically played by using an audio module.

In addition, it should be further noted that for a network ring back tone, because an audio packet is from a network side, after receiving the audio packet, the calling terminal needs to parse the audio packet. In this way, the audio module can perform network tone play based on audio data obtained through parsing. Therefore, in the ring back tone play method provided in the embodiments of this application, a data processing module (which may be referred to as a Data module) for processing an audio packet further needs to be used.

Based on this, in the following scenario description, functional modules included in the calling terminal are mainly the audio module, the data processing module, and the IMS module.

In addition, it should be further noted that in an actual application, a function implemented by the data processing module may be integrated into the IMS module for implementation. In the embodiments, an example in which the function of the data processing module is integrated into the IMS module is used.

In addition, because an operation in a ring back tone play procedure is mainly an operation performed after the calling terminal receives signaling that indicates a ring back tone type and is sent by the network side, a base station is used as an example of an object that is shown in the accompanying drawings and that interacts with the calling terminal. Other objects, for example, a core network and a called terminal, in the call service are not shown.

For details of a specific structure of the Modem protocol stack and a function that can be implemented at each layer, refer to a standard file of the Modem protocol stack. Details are not described herein again.

In addition, it should be further noted that it may be learned from the foregoing description that in an actual application, there may be two specific cases, namely, the foregoing case 1 and case 2, because different chips are used in a terminal. For ease of description, the case 1 is used as an example in the following scenarios.

In addition, it should be further noted that in an actual application, before receiving 180 signaling, the calling terminal may receive other signaling indicating a ring back tone type, for example, 183 signaling. For a local ring back tone, a prerequisite for local tone play is to receive the 180 signaling. For ease of description, in the embodiments, descriptions are provided from perspectives of two major scenarios.

Scenario 1: 183 signaling is received before 180 signaling is received.

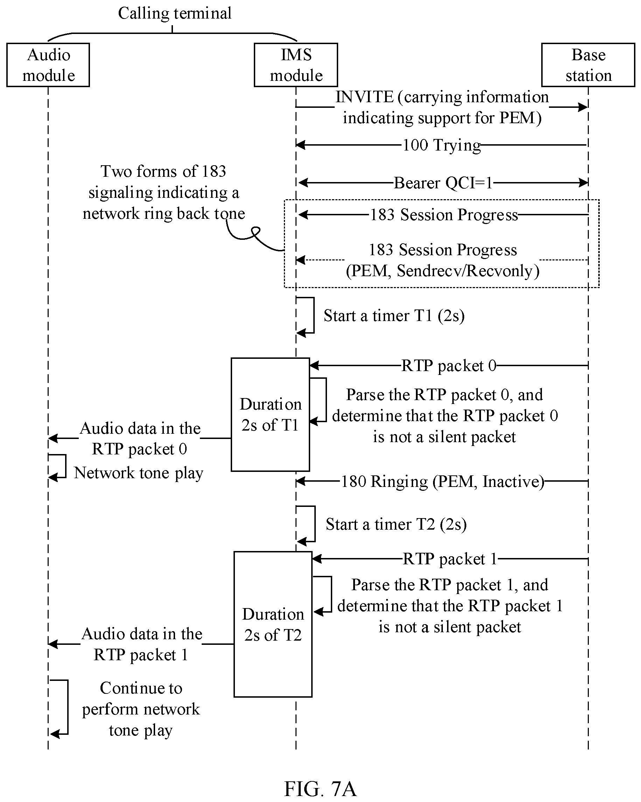

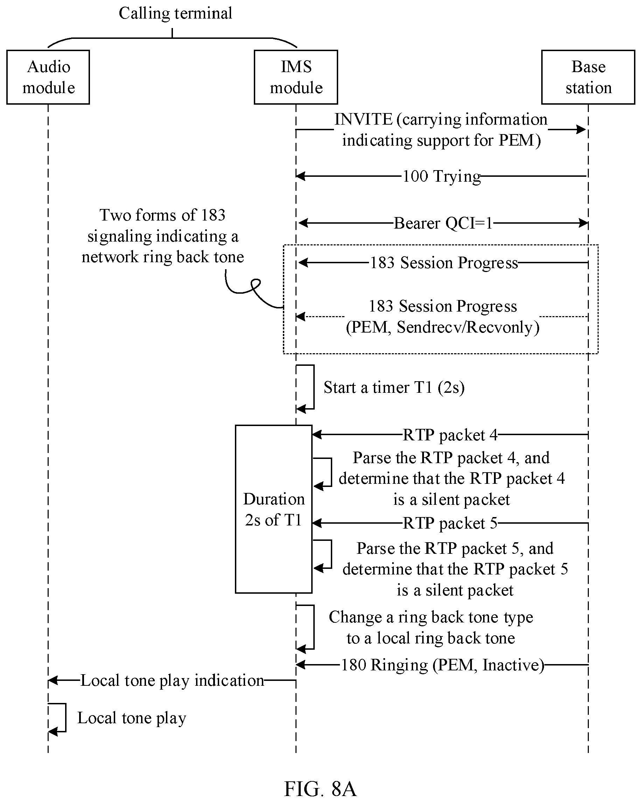

With reference to FIG. 7A to FIG. 7C and FIG. 8A to FIG. 8C, for example, in some implementations, when a calling terminal needs to implement a call service with a called terminal, an IMS module in the calling terminal initiates INVITE signaling including information indicating support for PEM. After the INVITE signaling is transmitted to a base station, the base station forwards the INVITE signaling to the called terminal to be called.

For specific descriptions of the information that indicates support for the PEM and that is included in the INVITE signaling, refer to the INVITE signaling initiated by the first UE to the second UE in the embodiment shown in FIG. 2. Details are not described herein again.

Still with reference to FIG. 7A to FIG. 7C and FIG. 8A to FIG. 8C, for example, after the calling terminal initiates the INVITE signaling, in a process in which the calling terminal waits for establishing a media session with the called terminal, the base station feeds back a session progress response of the current call service to the IMS module in the calling terminal based on actual call service progress, and provides a ring back tone indication. In this way, the calling terminal provides corresponding feedback based on the 183 signaling. For example, a corresponding ring back tone is played, so that a user learns of current session progress, to improve user experience.

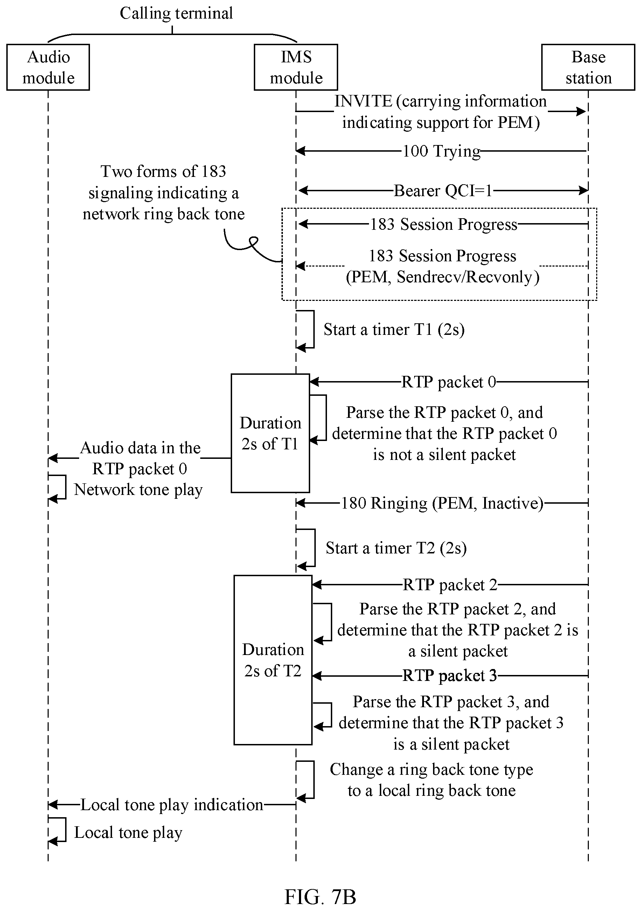

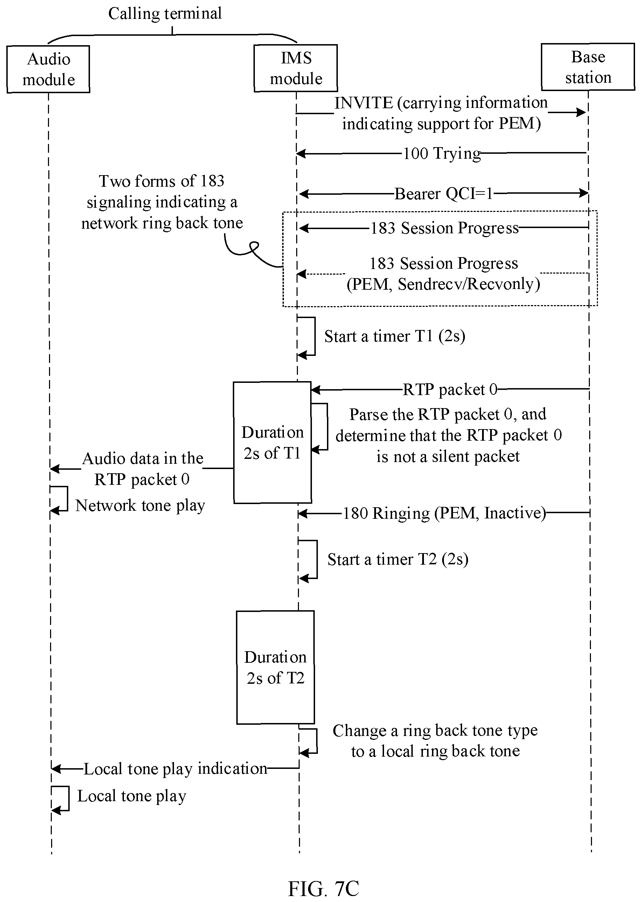

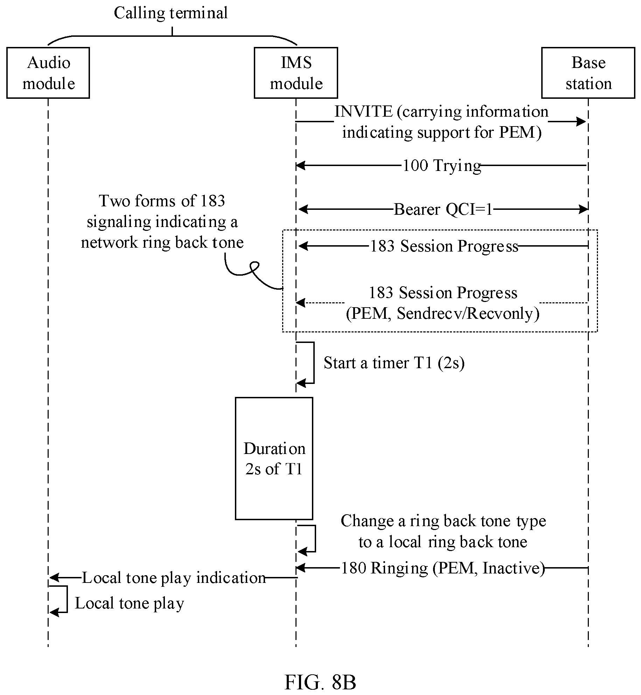

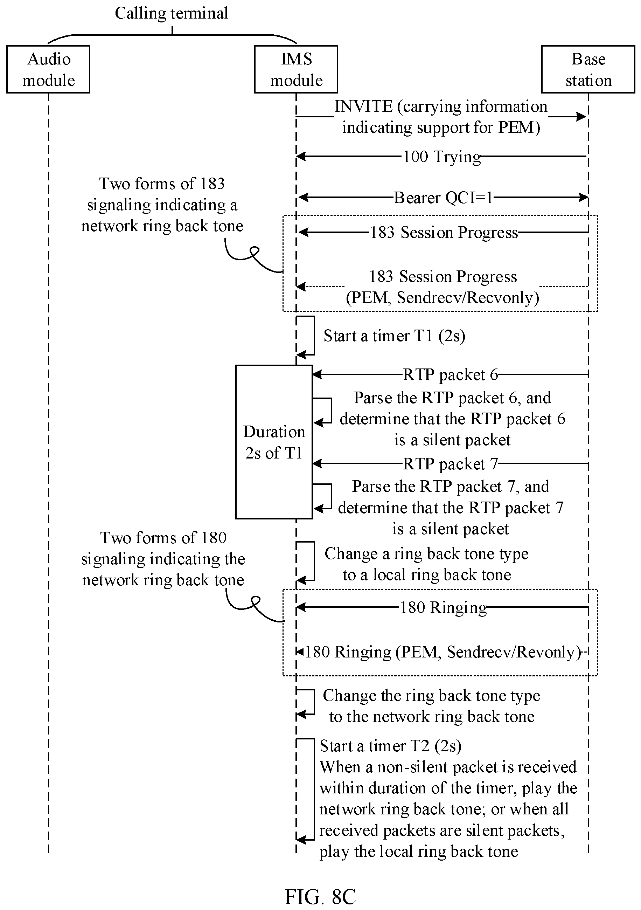

It may be learned the foregoing description of the signaling for determining the ring back tone played by the calling terminal that the 183 signaling may be used to indicate a ring back tone type. Therefore, after receiving the 183 signaling delivered by the base station, the IMS module in the calling terminal may determine the ring back tone type based on ring back tone determining logic shown in FIG. 7A, FIG. 7B, FIG. 7C, FIG. 8A, FIG. 8B, or FIG. 8C, and then play a ring back tone based on the determined ring back tone type.

It should be noted that when the 183 signaling indicates that the ring back tone type is a local ring back tone, the 180 signaling needs to be received before local tone play can be actually performed. Therefore, in this embodiment, an example in which the ring back tone type indicated by the 183 signaling is a network ring back tone is used to describe a processing procedure of playing a ring back tone in this scenario.

It may be learned from Table 1 that when the 183 signaling does not include a PEM header field or includes a PEM header field whose value is Sendrecv/Recvonly, the indicated ring back tone type is the network ring back tone. In a scenario in which the 183 signaling indicates the network ring back tone, there may be further a scenario in which the calling terminal starts to play the ring back tone before receiving the180 signaling and a scenario in which the ring back tone is not played before the 180 signaling is received.

For example, the scenario in which the calling terminal starts to play the ring back tone before receiving the180 signaling can be shown in FIG. 7A to FIG. 7C.

With reference to FIG. 7A to FIG. 7C, for example, after determining, based on the 183 signaling, that the ring back tone type is network tone play, the calling terminal may start a timer, for example, T1 (timing duration is 2s). Then, it is monitored, within the timing duration corresponding to T1, whether an audio packet (subsequently referred to as an RTP packet) corresponding to the network ring back tone is received.

Still with reference to FIG. 7A to FIG. 7C, for example, when the IMS module in the calling terminal receives, within the timing duration corresponding to T1, an RTP packet (for example, an RTP packet 0) delivered by a network side, the RTP packet 0 is parsed, to determine a sound coding file format of the RTP packet 0 from content obtained through parsing, and then a value of an FT flag bit used to indicate whether the RTP packet 0 is a silent packet is obtained from the RTP packet 0 based on the determined sound coding file format.

For example, when the value of the FT flag bit obtained from the RTP packet 0 is a silent value that is set in a standard protocol of the sound coding file format, it is determined that the RTP packet 0 is a silent packet. Otherwise, it is determined that the RTP packet 0 is not a silent packet, that is, there is audio data whose sound can be played.

Still with reference to FIG. 7A to FIG. 7C, for example, in this embodiment, an example in which the RTP packet 0 received within the timing duration corresponding to T1 is not a silent packet is used. In this case, the IMS module may transmit audio data obtained through parsing from the RTP packet 0 to an audio module. In this way, the audio module can perform network tone play, that is, play audio data corresponding to the network ring back tone.

It should be understood that the foregoing description is merely an example listed to better understand the technical solution of this embodiment, and is not used as a unique limitation on this embodiment.

For the scenario in which the calling terminal starts to play the ring back tone before receiving the 180 signaling, there may be further a scenario 1.1a, a scenario 1.1b, and a scenario 1.1c respectively shown in FIG. 7A to FIG. 7C.

### Scenario 1.1a:

With reference to FIG. 7A, for example, after playing the network ring back tone, the calling terminal receives 180 signaling indicating that a ring back tone type is the local ring back tone, for example, including a PEM header field whose value is Inactive. In this scenario, because play of the network ring back tone is started before the 180 signaling, and a sound is played, to not affect user experience and avoid a case in which the ring back tone is suddenly switched from a color ring back tone that is set by a called user to a "beep" sound, the IMS module may start another timer, for example, T2 (timing duration is 2s). Then, it is monitored, within the timing duration corresponding to T2, whether an RTP packet corresponding to the network ring back tone is received.

Still with reference to FIG. 7A, for example, when the IMS module receives, within the timing duration corresponding to T2, an RTP packet (for example, an RTP packet 1) delivered by the network side, the RTP packet 1 is parsed, to determine a sound coding file format of the RTP packet 1 from content obtained through parsing, and then a value of an FT flag bit used to indicate whether the RTP packet 1 is a silent packet is obtained from the RTP packet 1 based on the determined sound coding file format.

For example, when the value of the FT flag bit obtained from the RTP packet 1 is a silent value that is set in a standard protocol of the sound coding file format, it is determined that the RTP packet 1 is a silent packet. Otherwise, it is determined that the RTP packet 1 is not a silent packet, that is, there is audio data whose sound can be played.

Still with reference to FIG. 7A, for example, in this embodiment, an example in which the RTP packet 1 received within the timing duration corresponding to T2 is not a silent packet is used. In this case, the IMS module may transmit audio data obtained through parsing from the RTP packet 1 to the audio module. In this way, the audio module can continue to perform network tone play, that is, play the audio data corresponding to the network ring back tone.

Therefore, in a process of waiting for the called terminal to answer a call, the calling terminal first receives the 183 signaling indicating network tone play. In a scenario in which an audio packet delivered by the network side is received before the 180 signaling is received, when the 180 signaling indicating local tone play is received in a process of playing the network ring back tone, the local ring back tone is not played first, but it is monitored, within a specified time, whether an audio packet delivered by the network side is still received. When the audio packet delivered by the network side is received within the specified time, and the received audio packet is not in a silent packet, the network ring back tone continues to be played, to avoid a case in which play of the network ring back tone (a color ring back tone that is set by the called party) is suddenly switched to play of the local ring back tone (a "beep" sound).

It should be understood that the foregoing description is merely an example listed to better understand the technical solution of this embodiment, and is not used as a unique limitation on this embodiment.

### Scenario 1.1b:

Still with reference to FIG. 7B, for example, when the IMS module receives, within timing duration corresponding to T2, an RTP packet (for example, an RTP packet 2) delivered by the network side, the RTP packet 2 is parsed, to determine a sound coding file format of the RTP packet 2 from content obtained through parsing, and then a value of an FT flag bit used to indicate whether the RTP packet 2 is a silent packet is obtained from the RTP packet 2 based on the determined sound coding file format.

Still with reference to FIG. 7B, for example, in this embodiment, an example in which the RTP packet 2 received within the timing duration corresponding to T2 is a silent packet is used. In this case, when the timing duration of T2 does not expire, the IMS module may continue to monitor whether a new RTP packet is received.

Still with reference to FIG. 7B, for example, when the IMS module receives, within the timing duration corresponding to T2, a new RTP packet (for example, an RTP packet 3) delivered by the network side, the RTP packet 3 is parsed, to determine a sound coding file format of the RTP packet 3 from content obtained through parsing, and then a value of an FT flag bit used to indicate whether the RTP packet 3 is a silent packet is obtained from the RTP packet 3 based on the determined sound coding file format.

Still with reference to FIG. 7B, for example, in this embodiment, an example in which the RTP packet 3 received within the timing duration corresponding to T2 is a silent packet is used. In this case, when the timing duration of T2 does not expire, the IMS module may continue to monitor whether a new RTP packet is received. If the timing duration corresponding to T2 currently expires, the IMS module may change the ring back tone type from network tone play to local tone play. In this embodiment, an example in which the timing duration corresponding to T2 currently expires is used.

Still with reference to FIG. 7B, for example, when the timing duration corresponding to T2 currently expires, and the IMS module does not receive an RTP packet that is not a silent packet, the IMS module may change the ring back tone type from the network ring back tone to the local ring back tone, and indicate the audio module to perform local tone play, that is, play audio data of a locally stored ring back tone, for example, a "beep" sound.

Therefore, a case in which in a process of waiting for the called terminal to answer a call, the calling terminal briefly plays the network ring back tone, and then enters a silent state, that is, does not play a sound, can be avoided. After the RTP packet corresponding to the network ring back tone is not received within a specified time, the local ring back tone is played, so that a calling user can learn that the current call is still waiting for the callee to answer, but is not interrupted.

It should be understood that the foregoing description is merely an example listed to better understand the technical solution of this embodiment, and is not used as a unique limitation on this embodiment.

### Scenario 1.1c:

Still with reference to FIG. 7C, for example, in a possible scenario, after receiving the 180 signaling indicating the local ring back tone and starting T2, the calling terminal may not receive an RTP packet within timing duration corresponding to T2. In this case, after T2 expires, the IMS module in the calling terminal may change the ring back tone type from the network ring back tone to the local ring back tone, and indicate the audio module to perform local tone play, that is, play audio data of a locally stored ring back tone, for example, a "beep" sound.

Therefore, in this scenario, a case in which in a process of waiting for the called terminal to answer a call, the calling terminal briefly plays the network ring back tone, and then enters a silent state, that is, does not play a sound, can also be avoided. After the RTP packet corresponding to the network ring back tone is not received within a specified time, the local ring back tone is played, so that a calling user can learn that the current call is still waiting for the callee to answer, but is not interrupted.

It should be understood that the foregoing description is merely an example listed to better understand the technical solution of this embodiment, and is not used as a unique limitation on this embodiment.

In addition, it should be further noted that the scenario 1.1a, the scenario 1.1b, and the scenario 1.1c shown in FIG. 8A to FIG. 8C are three mutually exclusive and independent scenarios. That is, only one of the three scenarios can appear at a same moment.

For example, for the scenario in which the calling terminal does not play the ring back tone before receiving the 180 signaling, there may be a scenario 1.2a, a scenario 1.2b, and a scenario 1.2c respectively shown in FIG. 8A to FIG. 8C.

### Scenario 1.2a:

With reference to FIG. 8A, for example, after determining, based on the 183 signaling, that the ring back tone type is network tone play, the calling terminal may start a timer, for example, T1 (timing duration is 2s). Then, it is monitored, within the timing duration corresponding to T1, whether an RTP packet corresponding to the network ring back tone is received.

Still with reference to FIG. 8A, for example, when the IMS module in the calling terminal receives, within the timing duration corresponding to T1, an RTP packet (for example, an RTP packet 4) delivered by a network side, the RTP packet 4 is parsed, to determine a sound coding file format of the RTP packet 4 from content obtained through parsing, and then a value of an FT flag bit used to indicate whether the RTP packet 4 is a silent packet is obtained from the RTP packet 4 based on the determined sound coding file format.

Still with reference to FIG. 8A, for example, in this embodiment, an example in which the RTP packet 4 received within the timing duration corresponding to T1 is a silent packet is used. In this case, when the timing duration of T1 does not expire, the IMS module may continue to monitor whether a new RTP packet is received.

Still with reference to FIG. 8A, for example, when the IMS module receives, within the timing duration corresponding to T1, a new RTP packet (for example, an RTP packet 5) delivered by the network side, the RTP packet 5 is parsed, to determine a sound coding file format of the RTP packet 5 from content obtained through parsing, and then a value of an FT flag bit used to indicate whether the RTP packet 5 is a silent packet is obtained from the RTP packet 5 based on the determined sound coding file format.

Still with reference to FIG. 8A, for example, in this embodiment, an example in which the RTP packet 5 received within the timing duration corresponding to T1 is a silent packet is used. In this case, when the timing duration of T1 does not expire, the IMS module may continue to monitor whether a new RTP packet is received. If the timing duration corresponding to T1 currently expires, the IMS module may change the ring back tone type from network tone play to local tone play. In this embodiment, an example in which the timing duration corresponding to T1 currently expires is used.

Because local tone play can be performed only after the 180 signaling is received, the IMS module in the calling terminal needs to wait for the 180 signaling delivered by the network side.

Still with reference to FIG. 8A, for example, when the IMS module receives the 180 signaling and a ring back tone type indicated by the 180 signaling is the local ring back tone, the IMS module may indicate an audio module to perform local tone play, that is, play audio data of a locally stored ring back tone, for example, a "beep" sound.

It should be understood that the foregoing description is merely an example listed to better understand the technical solution of this embodiment, and is not used as a unique limitation on this embodiment.

### Scenario 1.2b:

Still with reference to FIG. 8B, for example, in a possible scenario, after receiving the 183 signaling indicating network tone play and starting T1, the calling terminal may not receive an RTP packet within timing duration corresponding to T1. In this case, the ring back tone type may be changed to the local ring back tone. After the 180 signaling indicating the local ring back tone is received, an audio module is directly triggered to perform local tone play.

It should be understood that the foregoing description is merely an example listed to better understand the technical solution of this embodiment, and is not used as a unique limitation on this embodiment.

### Scenario 1.2c:

Still with reference to FIG. 8C, for example, in another possible scenario, after receiving the 183 signaling indicating network tone play and starting T1, the calling terminal may not receive an RTP packet within timing duration corresponding to T1. Alternatively, all RTP packets received within timing duration of T1 are silent packets. For example, both an RTP packet 6 and an RTP packet 7 received within the timing duration corresponding to T1 in FIG. 8C are silent packets. However, after the ring back tone type is changed to the local ring back tone, when the received 180 signaling indicates that the ring back tone type is the network ring back tone, the IMS module may change the ring back tone type to the network ring back tone again, start a timer T2, and then play the ring back tone within timing duration corresponding to T2 by using processing logic in step 203 and step 204 shown in FIG. 6A.

It should be noted that to avoid endless cyclic determining, it may be set that determining logic in step 203 and step 204 shown in FIG. 6A is executed only once after the calling terminal receives the 180 signaling.

It should be understood that the foregoing description is merely an example listed to better understand the technical solution of this embodiment, and is not used as a unique limitation on this embodiment. In an actual application, a quantity of determining times may be set based on a service requirement.

In addition, it should be further noted that the scenario 1.2a, the scenario 1.2b, and the scenario 1.2c shown in FIG. 8A to FIG. 8C are three mutually exclusive and independent scenarios. That is, only one of the three scenarios can appear at a same moment.

Scenario 2: No 183 signaling is received, and 180 signaling is directly received.

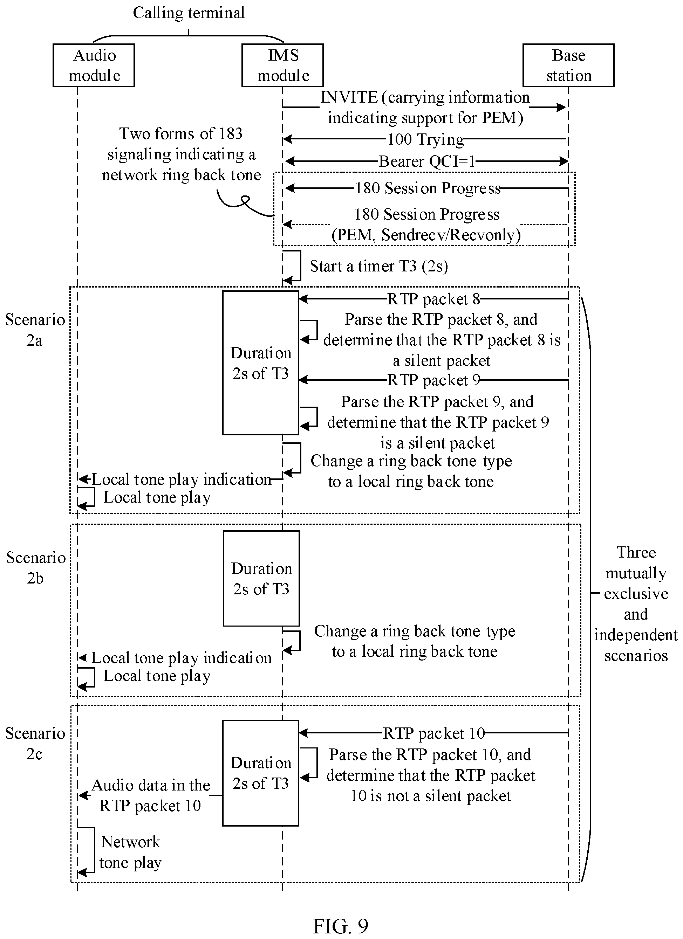

With reference to FIG. 9, for example, for specific details in which a calling terminal initiates INVITE signaling and establishes a bearer with a base station, refer to the embodiment part shown in FIG. 2, FIG. 7A to FIG. 7C, or FIG. 8A to FIG. 8C. Details are not described herein again.

Still with reference to FIG. 9, for example, after the calling terminal establishes a bearer with the base station, no 183 signaling is received, and 180 signaling is directly received. In this case, an IMS module in the calling terminal may determine a ring back tone type based on the 180 signaling. For a specific determining manner, refer to the embodiment part shown in FIG. 2. Details are not described herein again.

Still with reference to FIG. 9, for example, an example in which the 180 signaling indicates a network ring back tone is used. In this case, in a possible implementation, there may be a scenario 2a, a scenario 2b, and a scenario 2c. The following separately provides descriptions from perspectives of the three scenarios.

### Scenario 2a:

With reference to FIG. 9, for example, the IMS module starts a timer, for example, T3 (timing duration is 2s). Then, it is monitored, within the timing duration corresponding to T3, whether an RTP packet corresponding to the network ring back tone is received.

Still with reference to FIG. 9, for example, when the IMS module in the calling terminal receives, within the timing duration corresponding to T3, an RTP packet (for example, an RTP packet 8) delivered by a network side, the RTP packet 8 is parsed, to determine a sound coding file format of the RTP packet 8 from content obtained through parsing, and then a value of an FT flag bit used to indicate whether the RTP packet 8 is a silent packet is obtained from the RTP packet 8 based on the determined sound coding file format.

Still with reference to FIG. 9, for example, in this embodiment, an example in which the RTP packet 8 received within the timing duration corresponding to T3 is a silent packet is used. In this case, when the timing duration of T3 does not expire, the IMS module may continue to monitor whether a new RTP packet is received.

Still with reference to FIG. 9, for example, when the IMS module receives, within the timing duration corresponding to T3, a new RTP packet (for example, an RTP packet 9) delivered by the network side, the RTP packet 9 is parsed, to determine a sound coding file format of the RTP packet 9 from content obtained through parsing, and then a value of an FT flag bit used to indicate whether the RTP packet 9 is a silent packet is obtained from the RTP packet 9 based on the determined sound coding file format.

Still with reference to FIG. 9, for example, in this embodiment, an example in which the RTP packet 9 received within the timing duration corresponding to T3 is a silent packet is used. In this case, when the timing duration of T3 does not expire, the IMS module may continue to monitor whether a new RTP packet is received. If the timing duration corresponding to T3 currently expires, the IMS module may change the ring back tone type from network tone play to local tone play. In this embodiment, an example in which the timing duration corresponding to T3 currently expires is used.

Still with reference to FIG. 9, for example, when the timing duration corresponding to T3 currently expires, and the IMS module does not receive an RTP packet that is not a silent packet, the IMS module may change the ring back tone type from the network ring back tone to a local ring back tone, and indicate an audio module to perform local tone play, that is, play audio data of a locally stored ring back tone, for example, a "beep" sound.

Therefore, a case in which when the ring back tone type determined based on the 180 signaling is the network ring back tone, the calling terminal blindly waits for the RTP packet from the network side, and consequently in a process of answering the call by a called terminal, the calling terminal is always in a silent state, that is, there is no ring back tone sound, can be avoided. After the RTP packet corresponding to the network ring back tone is not received within a specified time, the local ring back tone is played, so that a calling user can learn that the current call is still waiting for the callee to answer, but is not interrupted.

It should be understood that the foregoing description is merely an example listed to better understand the technical solution of this embodiment, and is not used as a unique limitation on this embodiment.

### Scenario 2b:

Still with reference to FIG. 9, for example, in a possible scenario, after receiving the 180 signaling indicating the network ring back tone and starting T3, the calling terminal may not receive an RTP packet within timing duration corresponding to T3. In this case, after T3 expires, the IMS module in the calling terminal may change the ring back tone type from the network ring back tone to a local ring back tone, and indicate an audio module to perform local tone play, that is, play audio data of a locally stored ring back tone, for example, a "beep" sound.

Therefore, in this scenario, a case in which when the ring back tone type determined based on the 180 signaling is the network ring back tone, the calling terminal blindly waits for the RTP packet from the network side, and consequently in a process of answering the call by a called terminal, the calling terminal is always in a silent state, that is, there is no ring back tone sound, can also be avoided. After the RTP packet corresponding to the network ring back tone is not received within a specified time, the local ring back tone is played, so that a calling user can learn that the current call is still waiting for the callee to answer, but is not interrupted.

It should be understood that the foregoing description is merely an example listed to better understand the technical solution of this embodiment, and is not used as a unique limitation on this embodiment.

### Scenario 2C:

Still with reference to FIG. 9, for example, in another possible implementation, when the IMS module in the calling terminal receives, within timing duration corresponding to T3, an RTP packet (for example, an RTP packet 10) delivered by a network side, the RTP packet 10 is parsed, to determine a sound coding file format of the RTP packet 10 from content obtained through parsing, and then a value of an FT flag bit used to indicate whether the RTP packet 10 is a silent packet is obtained from the RTP packet 10 based on the determined sound coding file format.

Still with reference to FIG. 9, for example, in this embodiment, an example in which the RTP packet 10 received within the timing duration corresponding to T3 is not a silent packet is used. In this case, the IMS module may transmit audio data obtained through parsing from the RTP packet 10 to an audio module. In this way, the audio module can continue to perform network tone play, that is, play audio data corresponding to the network ring back tone.

It should be understood that the foregoing description is merely an example listed to better understand the technical solution of this embodiment, and is not used as a unique limitation on this embodiment.

In addition, it should be noted that timing duration corresponding to the foregoing timers may be the same or different. This is not limited in this application.

In addition, it should be further noted that the scenario 2a, the scenario 2b, and the scenario 2c shown in FIG. 9 are three mutually exclusive and independent scenarios. That is, only one of the three scenarios can appear at a same moment.

In addition, it should be understood that to implement the foregoing functions, the terminal device includes corresponding hardware and/or software modules for performing the functions. Algorithm steps in the examples described with reference to the embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions with reference to the embodiments for each particular application, but it should not be considered that the implementation goes beyond the scope of this application.

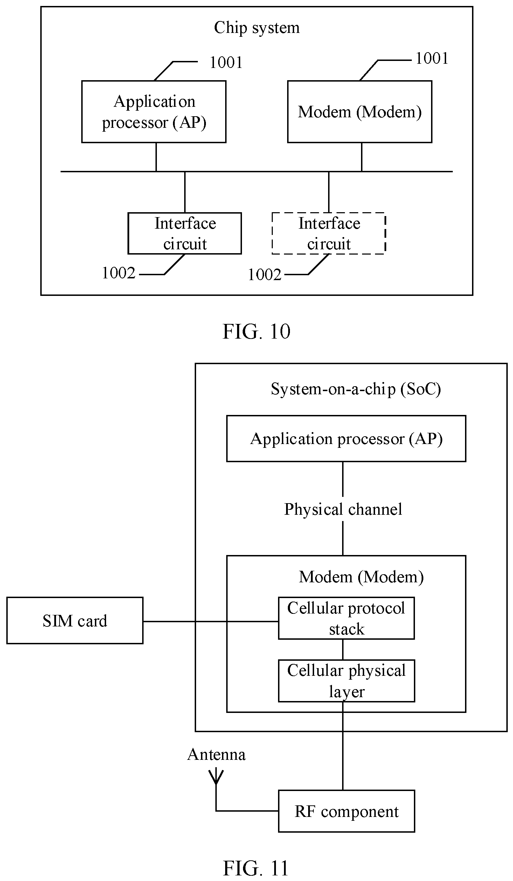

In addition, it should be noted that in an actual application scenario, the ring back tone play method that is provided in the foregoing embodiments and that is implemented by the terminal device may alternatively be performed by a chip system included in the terminal device. As shown in FIG. 10, the chip system 1000 may include at least one processor (for example, an application processor AP and a modem Modem) 1001 and at least one interface circuit 1002. The processor 1001 and the interface circuit 1002 may be connected to each other through a line. For example, the interface circuit 1002 may be configured to receive a signal from another apparatus (for example, a memory of a terminal device). For another example, the interface circuit 1002 may be configured to send a signal to another apparatus (for example, the processor 1001). For example, the interface circuit 1002 may read instructions stored in the memory, and send the instructions to the processor 1001. When the instructions are executed by the processor 1001, the terminal device is enabled to perform the steps in the foregoing embodiments. Certainly, the chip system may further include another discrete component. This is not specifically limited in this embodiment of this application.

In addition, an embodiment of this application further provides a computer-readable storage medium. The computer storage medium stores computer instructions. When the computer instructions are run on a terminal device, the terminal device is enabled to perform the foregoing related method steps to implement the ring back tone play method in the foregoing embodiments.

In addition, an embodiment of this application further provides a computer program product. When the computer program product is run on a terminal device, the terminal device is enabled to perform the foregoing related method steps to implement the ring back tone play method in the foregoing embodiments.

In addition, an embodiment of this application further provides a system-on-a-chip, which may also be referred to as a system on chip (System on Chip, SoC).

For example, FIG. 11 is a schematic diagram of a structure of an SoC. As shown in FIG. 11, the SoC includes capabilities of an AP and a Modem. The AP is configured to process internal data of a terminal device, excluding a part related to external communication. The Modem is configured to process a part for external communication, including processing of services such as making calls, sending SMS messages, and accessing the Internet.

Specifically, in this embodiment of this application, the ring back tone play method is processed by the Modem.

Still with reference to FIG. 11, for example, a physical channel such as a shared memory or a bus is established between the AP and the Modem, to implement data transmission between the AP and the Modem, for example, transmission of data such as conversation content and SMS message content.

In the example in FIG. 11, the Modem is integrated into the SoC. However, in actual implementation, the Modem may alternatively exist in a form of an independent chip, and is welded together with the SoC to a main board of the terminal device. The following mainly provides descriptions by using the form shown in FIG. 11 as an example, that is, the Modem is integrated into the SoC.

Still with reference to FIG. 11, for example, the Modem may include a cellular protocol stack and a cellular physical layer. The cellular physical layer in the Modem may communicate with a radio frequency (Radio Frequency, RF) component.

It may be understood that the RF component is mainly configured to process a received signal and a transmitted signal in a wireless communication process.

For example, with reference to FIG. 11, the RF component communicates with the cellular physical layer in the Modem, and may be configured to: receive a cellular baseband digital signal, perform digital-to-analog conversion processing on the cellular baseband digital signal, transmit a processed signal through an antenna, perform analog-to-digital conversion processing on a radio electromagnetic wave signal received by the antenna, and send a processed signal to a cellular baseband.

It should be understood that the foregoing description is merely an example listed to better understand the technical solution of this embodiment, and is not used as a unique limitation on this embodiment.

In addition, it may be learned from the foregoing descriptions that the terminal device, the computer-readable storage medium, the computer program product, or the chip provided in embodiments of this application may be configured to perform the corresponding method provided above. Therefore, for beneficial effects that can be achieved by the terminal device, the computer-readable storage medium, the computer program product, or the chip, refer to the beneficial effects in the corresponding method provided above. Details are not described herein again.

To describe in detail the beneficial effects of the ring back tone play method provided in the embodiments of this application, the following provides descriptions through comparison with a related technology.

Specifically, based on stipulations in the China Telecom White Paper (subsequently briefly referred to as the White Paper), it may be learned that for a normal IMS intra-domain call, when a called network element returns 18* signaling (for example, 183 signaling or 180 signaling), and the returned 18* signaling does not include a PEM header field, a calling terminal specifically provides a ring back tone, that is, plays a local ring back tone. When a called network element returns 18* signaling, and the returned 18* signaling includes a PEM header field and an SDP, a backward network element provides a ring back tone, that is, plays a network ring back tone.

In addition, based on the stipulations in the White Paper, it may be learned that for a normal IMS intra-domain call, in a process of receiving a remote network media stream, namely, an audio packet corresponding to the network ring back tone, if 18* signaling that includes P-Early-Media information whose value is "Inactive" is received, the calling terminal starts to play the local ring back tone. However, in the ring back tone play method provided in the embodiments of this application, in a process of receiving a remote network media stream, it is determined whether all audio packets received within a specified time are silent packets, and when all the audio packets are silent packets, switching to play of the local ring back tone is performed. On the contrary, if there is a non-silent packet, namely, an audio packet whose sound can be played, in the audio packet received within the specified time, the network ring back tone is preferentially played instead of immediately performing switching to play of the local ring back tone based on the stipulations in the White Paper after signaling indicating the local ring back tone is received.

In addition, it should be noted that the ring back tone play method provided in the embodiments of this application is particularly applicable to a scenario in which the calling terminal involves mobile number portability. That is, all technical problems resolved in this application mainly occur in a specific network environment of mobile number portability. In addition, in this scenario, there is a relatively low probability that all received audio packets of the network ring back tone are silent packets. However, the ring back tone play method provided in the embodiments of this application can effectively resolve the foregoing problem that occurs occasionally in this specific scenario, making ring back tone play more stable and user experience better.

As described above, the foregoing embodiments are merely intended to describe the technical solutions in this application, but not intended to limit this application. Although this application is described in detail with reference to the foregoing embodiments, a person of ordinary skill in the art should understand that modifications may still be made to the technical solutions described in the foregoing embodiments or equivalent replacements may still be made to some technical features thereof. However, these modifications or replacements do not make the essence of the corresponding technical solutions depart from the scope of the technical solutions in the embodiments of this application.

## Claims

1. A ring back tone play method, applied to a first terminal, wherein the method comprises:
sending call request INVITE signaling, wherein the INVITE signaling comprises early media P-Early-Media information; and
playing a local ring back tone after signaling indicating a network ring back tone is received and when all received audio packets are silent packets within first duration.

2. The method according to claim 1, wherein the P-Early-Media information comprised in the INVITE signaling is P-Early-Media: supported.

3. The method according to claim 1, wherein the playing a local ring back tone after signaling indicating a network ring back tone is received and when all received audio packets are silent packets within first duration comprises:
starting timing after the signaling indicating the network ring back tone is received, wherein timing duration is the first duration; and
playing the local ring back tone when an audio packet delivered by a network side is received within the first duration, and lengths of all received audio packets are less than or equal to a preset length.

4. The method according to claim 3, wherein the method further comprises:
playing the local ring back tone when no audio packet delivered by the network side is received within the first duration.

5. The method according to claim 3, wherein the preset length is 19.

6. The method according to claim 1, wherein the playing a local ring back tone after signaling indicating a network ring back tone is received and when all received audio packets are silent packets within first duration comprises:
starting timing after the signaling indicating the network ring back tone is received, wherein timing duration is the first duration; and
playing the local ring back tone when an audio packet delivered by a network side is received within the first duration, and packet types of all received audio packets are a preset packet type.

7. The method according to claim 6, wherein the preset packet type is SID (COMFORT NOISE FRAME).

8. The method according to claim 1, wherein the signaling indicating the network ring back tone comprises first signaling and/or second signaling, the first signaling is 1st signaling that indicates a ring back tone type and that is delivered by a network side after the INVITE signaling is initiated, and the second signaling is last signaling that indicates a ring back tone type and that is delivered by the network side.

9. The method according to claim 8, wherein the first signaling is 183 signaling, and the second signaling is 180 signaling.

10. The method according to claim 8, wherein
when the first signaling comprises a PEM header field, and a value comprised in the PEM header field is a first value, the first signaling is signaling indicating the local ring back tone; or
when the first signaling comprises the PEM header field, and a value comprised in the PEM header field is a second value, the first signaling is signaling indicating the network ring back tone.

11. The method according to claim 8, wherein
when the second signaling comprises a PEM header field, and a value comprised in the PEM header field is a first value, the second signaling is signaling indicating the local ring back tone; or
when the second signaling comprises the PEM header field, and a value comprised in the PEM header field is a second value, the second signaling is signaling indicating the network ring back tone.

12. The method according to claim 10 or 11, wherein the first value indicates that an early media function is not supported, and the second value indicates that the audio packet is allowed to be received.

13. The method according to claim 12, wherein the first value is Inactive, and the second value is Sendrecv or Recvonly.

14. The method according to claim 13, wherein when a value comprised in the first signaling is the first value, the PEM header field is P-Early-Media: Inactive, or when a value comprised in the first signaling is the second value, the PEM header field is P-Early-Media: Sendrecv or P-Early-Media: Recvonly.

15. The method according to claim 8, wherein the method further comprises:
receiving the first signaling, wherein the first signaling is signaling indicating the network ring back tone;
when the second signaling is received within the first duration, the second signaling comprises a PEM header field, and a value comprised in the PEM header field is a first value, the second signaling is signaling indicating the local ring back tone; and
playing the local ring back tone.

16. The method according to claim 15, wherein the method further comprises:
when the second signaling is received within the first duration, the second signaling comprises the PEM header field, and the value comprised in the PEM header field is a second value, the second signaling is signaling indicating the network ring back tone; and
playing the local ring back tone when all received audio packets are silent packets within second duration.

17. The method according to claim 16, wherein the method further comprises:
playing the network ring back tone when there is a non-silent packet in the received audio packet within the second duration.

18. The method according to claim 1, wherein the method further comprises:
playing the network ring back tone after the signaling indicating the network ring back tone is received and when there is a non-silent packet in the received audio packet within the first duration.

19. The method according to claim 18, wherein the method further comprises:
receiving second signaling in a process of playing the network ring back tone, wherein the second signaling is last signaling that indicates a ring back tone type and that is delivered by a network side;
when the second signaling comprises a PEM header field, and a value comprised in the PEM header field is a first value, the second signaling is signaling indicating the local ring back tone; and
playing the local ring back tone when all received audio packets are silent packets or no audio packet is received within third duration; or
continuing to play the network ring back tone when there is a non-silent packet in a received audio packet within the third duration.

20. The method according to claim 19, wherein the method further comprises:
when the second signaling comprises the PEM header field, and the value comprised in the PEM header field is a second value, the second signaling is signaling indicating the network ring back tone; and
playing the local ring back tone when all received audio packets are silent packets or no audio packet is received within fourth duration; or
continuing to play the network ring back tone when there is a non-silent packet in a received audio packet within the fourth duration.

21. The method according to claim 19, wherein the method further comprises:
when the second signaling does not comprise the PEM header field, playing a ring back tone based on a ring back tone type indicated by the first signaling.

22. A terminal device, wherein the terminal device comprises a memory and a processor, the memory is coupled to the processor, the memory stores program instructions, and when the program instructions are executed by the processor, the terminal device is enabled to perform the ring back tone play method according to any one of claims 1 to 21.

23. A computer-readable storage medium, comprising a computer program, wherein when the computer program is run on a terminal device, the terminal device is enabled to perform the ring back tone play method according to any one of claims 1 to 21.

24. A chip system, comprising a processor, configured to: invoke a computer program from a memory, and run the computer program, to enable a terminal device in which the chip system is installed to perform the ring back tone play method according to any one of claims 1 to 21.
